# EUROPEAN PATENT APPLICATION

(11) **EP 4 694 547 A2**
(43) Date of publication of application: **11.02.2026**
(21) Application number: 24735132.3
(22) Date of filing: 08.04.2024
(51) Int. Cl.: H04W 76/14, H04W 72/02, H04W 76/18, H04W 24/08, H04L 5/00, H04W 28/02, H04W 92/18

(54) **METHOD AND APPARATUS FOR PERFORMING COMMUNICATION ON BASIS OF CARRIER AGGREGATION**

(30) Priority: 06.04.2023 US 202363457774 P
(71) Applicant: LG ELECTRONICS, INC., Seoul 07336 (KR)
(72) Inventor: LEE, Seungmin, Seoul 06772 (KR)
(74) Representative: Maikowski & Ninnemann Patentanwälte Partnerschaft mbB
(86) International application number: PCT/KR2024/004617
(87) International publication number: WO 2024/210671

(57) **Abstract**

Provided are a method for performing wireless communication by a first device and an apparatus supporting same. The first device may: establish a PC5 radio resource control (RRC) connection with a second device; select a plurality of carriers; release, based on a number of consecutive discontinuous transmissions (DTX) for a carrier among the plurality of carriers reaching a threshold value, the carrier; and detect, based on all of the plurality of carriers being released, a sidelink radio link failure.

## Description

### TECHNICAL FIELD

This disclosure relates to a wireless communication system.

### BACKGROUND ART

Sidelink (SL) communication is a communication scheme in which a direct link is established between User Equipments (UEs) and the UEs exchange voice and data directly with each other without intervention of a base station. SL communication is under consideration as a solution to the overhead of a base station caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR).

### DISCLOSURE

### TECHNICAL SOLUTION

In an embodiment, provided is a method for performing wireless communication by a first device. The method may comprise: establishing a PC5 radio resource control (RRC) connection with a second device; selecting a plurality of carriers; releasing, based on a number of consecutive discontinuous transmissions (DTX) for a carrier among the plurality of carriers reaching a threshold value, the carrier; and detecting, based on all of the plurality of carriers being released, a sidelink radio link failure.

In an embodiment, provided is a first device adapted to perform wireless communication. The first device may comprise: at least one transceiver; at least one processor; and at least one memory connected to the at least one processor and storing instructions that, based on being executed by the at least one processor, cause the first device to perform operations comprising: establishing a PC5 radio resource control (RRC) connection with a second device; selecting a plurality of carriers; releasing, based on a number of consecutive discontinuous transmissions (DTX) for a carrier among the plurality of carriers reaching a threshold value, the carrier; and detecting, based on all of the plurality of carriers being released, a sidelink radio link failure.

In an embodiment, provided is a processing device adapted to control a first device. The processing device may comprise: at least one processor; and at least one memory connected to the at least one processor and storing instructions that, based on being executed by the at least one processor, cause the first device to perform operations comprising: establishing a PC5 radio resource control (RRC) connection with a second device; selecting a plurality of carriers; releasing, based on a number of consecutive discontinuous transmissions (DTX) for a carrier among the plurality of carriers reaching a threshold value, the carrier; and detecting, based on all of the plurality of carriers being released, a sidelink radio link failure.

In an embodiment, provided is a non-transitory computer-readable storage medium storing instructions. The instructions, when executed, may cause a first device to perform operations comprising: establishing a PC5 radio resource control (RRC) connection with a second device; selecting a plurality of carriers; releasing, based on a number of consecutive discontinuous transmissions (DTX) for a carrier among the plurality of carriers reaching a threshold value, the carrier; and detecting, based on all of the plurality of carriers being released, a sidelink radio link failure.

### BRIEF DESCRIPTION OF THE DRAWINGS

FIG. 1 shows a communication structure providable in a 6G system, based on an embodiment of the present disclosure.
FIG. 2 shows an electromagnetic spectrum, based on an embodiment of the present disclosure.
FIG. 3 shows a structure of an NR system, based on an embodiment of the present disclosure.
FIG. 4 shows a radio protocol architecture, based on an embodiment of the present disclosure.
FIG. 5 shows a structure of a radio frame of an NR, based on an embodiment of the present disclosure.
FIG. 6 shows a structure of a slot of an NR frame, based on an embodiment of the present disclosure.
FIG. 7 shows an example of a BWP, based on an embodiment of the present disclosure.
FIG. 8 shows a procedure of performing V2X or SL communication by a UE based on a transmission mode, based on an embodiment of the present disclosure.
FIG. 9 shows three cast types, based on an embodiment of the present disclosure.
FIG. 10 shows a resource unit for channel busy ratio (CBR) measurement, based on an embodiment of the present disclosure.
FIG. 11 shows an example of overlapping PSFCH time resources between multiple carriers, based on an embodiment of the present disclosure.
FIG. 12 shows a method for a first device to perform wireless communication, based on an embodiment of the present disclosure.
FIG. 13 shows a method for a second device to perform wireless communication, based on an embodiment of the present disclosure.
FIG. 14 shows a communication system 1, based on an embodiment of the present disclosure.
FIG. 15 shows wireless devices, based on an embodiment of the present disclosure.
FIG. 16 shows a signal process circuit for a transmission signal, based on an embodiment of the present disclosure.
FIG. 17 shows another example of a wireless device, based on an embodiment of the present disclosure.
FIG. 18 shows a hand-held device, based on an embodiment of the present disclosure.
FIG. 19 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as intelligent connectivity, deep connectivity, holographic connectivity and ubiquitous connectivity, and the 6G system may satisfy the requirements shown in Table 1 below. That is, Table 1 shows the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

The 6G system may have key factors such as enhanced mobile broadband (eMBB), ultra-reliable low latency communications (URLLC), massive machine type communications (mMTC), AI integrated communication, tactile internet, high throughput, high network capacity, high energy efficiency, low backhaul and access network congestion, and enhanced data security.

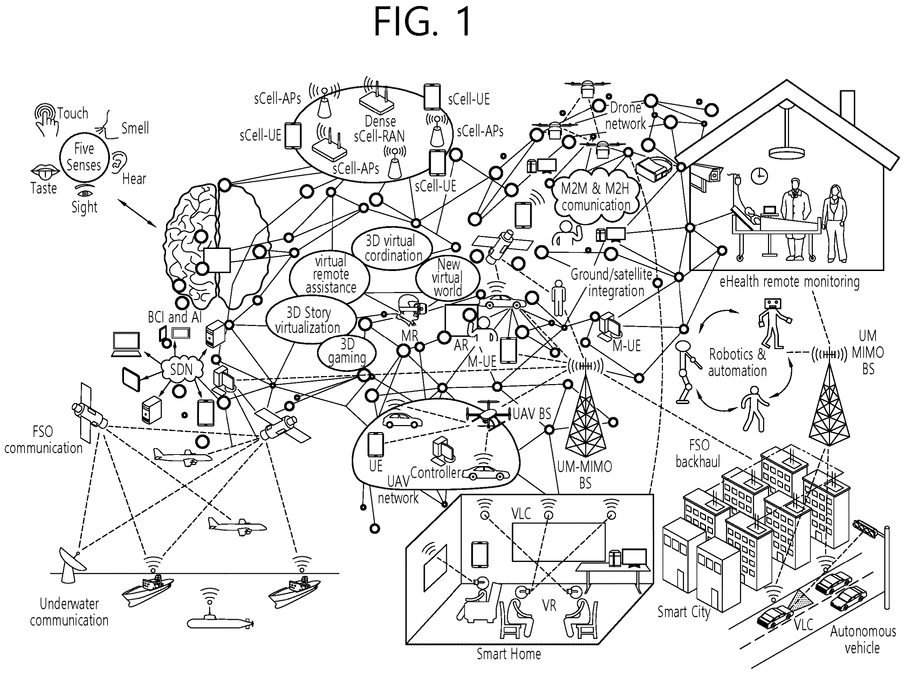

FIG. 1 shows a communication structure providable in a 6G system, based on an embodiment of the present disclosure. The embodiment of FIG. 1 may be combined with various embodiments of the present disclosure.

The 6G system will have 50 times higher simultaneous wireless communication connectivity than a 5G wireless communication system. URLLC, which is the key feature of 5G, will become more important technology by providing end-to-end latency less than 1 ms in 6G communication. The 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In 6G, new network characteristics may be as follows.
- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5 GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network composed of heterogeneous networks improves overall QoS and reduces costs.
- High-capacity backhaul: Backhaul connection is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5 GB network in order to ensure flexibility, reconfigurability and programmability.

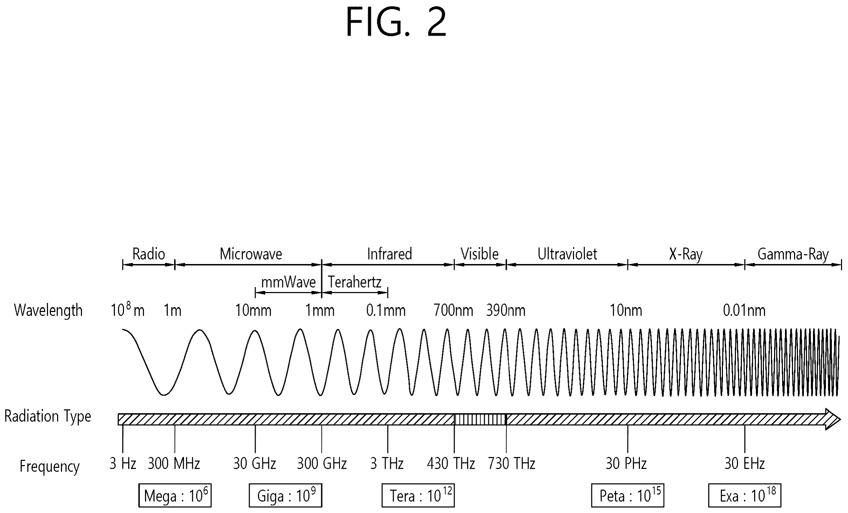

Core implementation technology of 6G system is described below.
- Artificial Intelligence (AI): Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. FIG. 2 shows an electromagnetic spectrum, based on an embodiment of the present disclosure. The embodiment of FIG. 2 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical backhaul network (FSO Backhaul Network)
- Non-terrestrial networks (NTN)
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An unmanned aerial vehicle (UAV) or drone will be an important factor in 6G wireless communication. In most cases, a high-speed data wireless connection is provided using UAV technology. A base station entity is installed in the UAV to provide cellular connectivity. UAVs have certain features, which are not found in fixed base station infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communications. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.
- Autonomous driving (self-driving): For perfect autonomous driving, it is necessary to notify dangerous situation of each other through communication between vehicle and vehicle, to check information like parking information location and signal change time through communication between vehicle and infrastructure such as parking lots and/or traffic lights. Vehicle to everything (V2X) that is a core element for establishing an autonomous driving infrastructure is a technology that vehicle communicates and shares with various elements in road for autonomous driving such as vehicle to vehicle (V2V), vehicle to infrastructure (V2I). To maximize a performance of autonomous driving and to secure high safety, high transmission speed and low latency technology have to be needed. Furthermore, to directly control vehicle in dangerous situation and to actively intervene vehicle driving beyond a level of a warning or a guidance message to driver, as the amount of the information to transmit and receive is larger, autonomous driving is expected to be maximized in 6G being higher transmission speed and lower latency than 5G.

For clarity in the description, 5G NR is mainly described, but the technical idea according to an embodiment of the present disclosure is not limited thereto. Various embodiments of the present disclosure can also be applied to 6G communication systems.

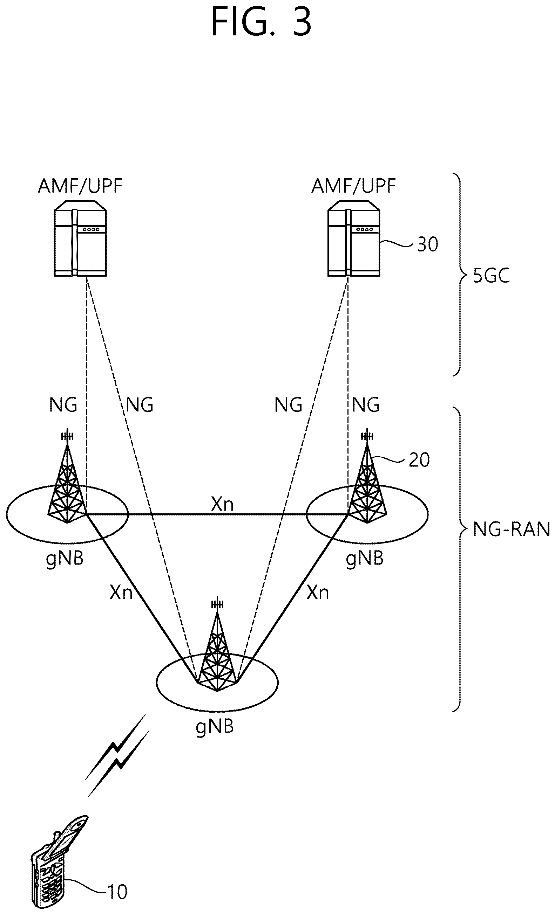

FIG. 3 shows a structure of an NR system, based on an embodiment of the present disclosure. The embodiment of FIG. 3 may be combined with various embodiments of the present disclosure.

Referring to FIG. 3, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 3 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

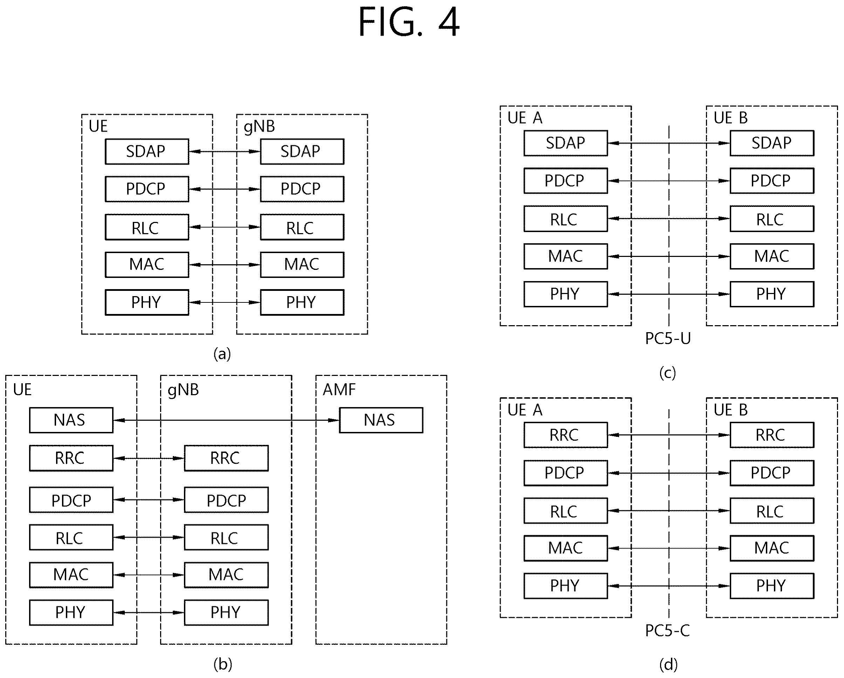

FIG. 4 shows a radio protocol architecture, based on an embodiment of the present disclosure. The embodiment of FIG. 4 may be combined with various embodiments of the present disclosure. Specifically, (a) of FIG. 4 shows a radio protocol stack of a user plane for Uu communication, and (b) of FIG. 4 shows a radio protocol stack of a control plane for Uu communication. (c) of FIG. 4 shows a radio protocol stack of a user plane for SL communication, and (d) of FIG. 4 shows a radio protocol stack of a control plane for SL communication.

Referring to FIG. 4, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

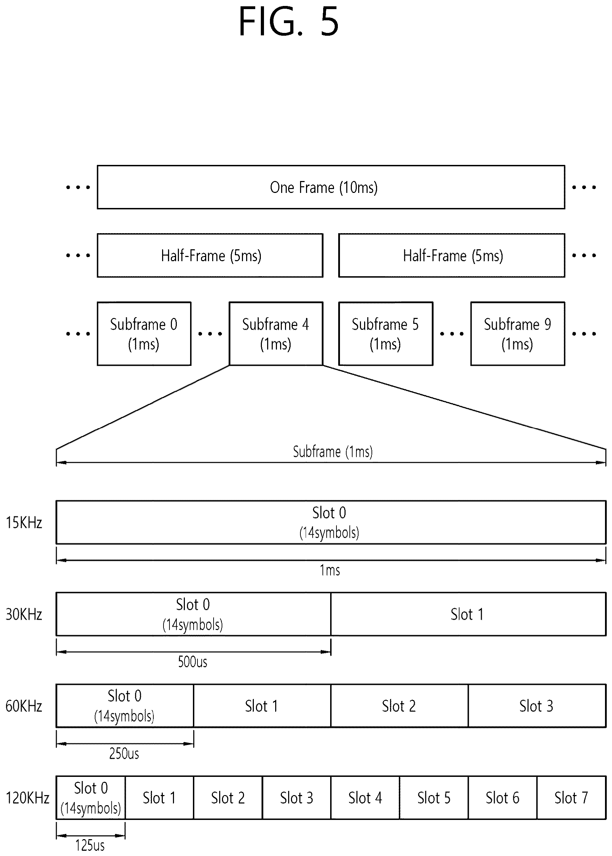

FIG. 5 shows a structure of a radio frame of an NR, based on an embodiment of the present disclosure. The embodiment of FIG. 5 may be combined with various embodiments of the present disclosure.

Referring to FIG. 5, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or an extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

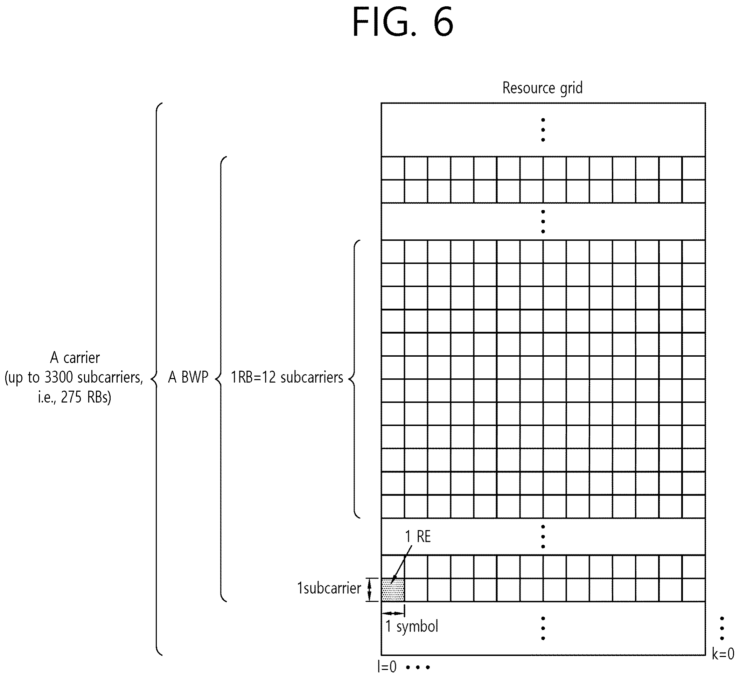

FIG. 6 shows a structure of a slot of an NR frame, based on an embodiment of the present disclosure. The embodiment of FIG. 6 may be combined with various embodiments of the present disclosure.

Referring to FIG. 6, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

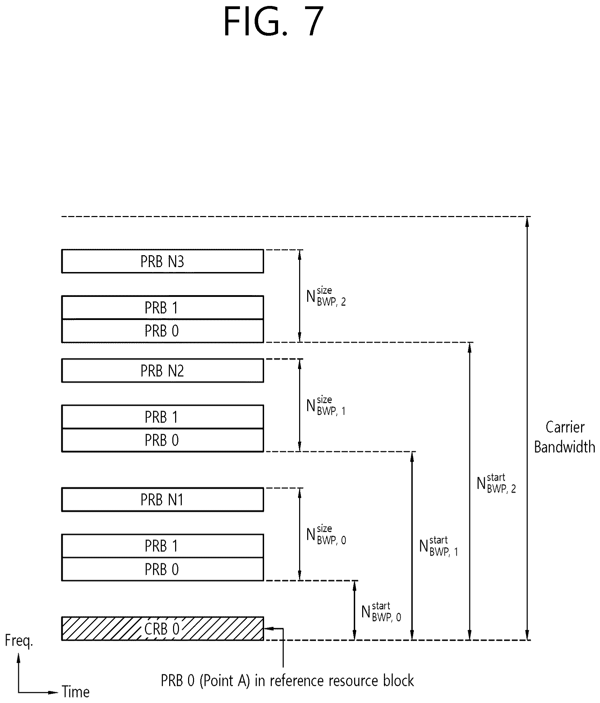

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{stan}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

For example, the UE may generate an S-SS/PSBCH block (i.e., S-SSB), and the UE may map and transmit the S-SS/PSBCH block (i.e., S-SSB) on physical resources. For example, the time-frequency structure of the S-SS/PSBCH block may be as follows.

In the time domain, the S-SS/PSBCH block may consist of N^{S-SSB}_{symb} OFDM symbols, numbered in increasing order from 0 to N^{S-SSB}_{symb} - 1 within the S-SS/PSBCH block, where S-PSS, S-SSS, and PSBCH with associated DM-RS are mapped to symbols as given by Table 5. The number of OFDM symbols in the S-SS/PSBCH block N^{S-SSB}_{symb} = 13 for normal cyclic prefix and N^{S-SSB}_{symb} = 11 for extended cyclic prefix. The first OFDM symbol in the S-SS/PSBCH block may be the first OFDM symbol in the slot.

In the frequency domain, the S-SS/PSBCH block may consist of 132 contiguous subcarriers with the subcarriers numbered in increasing order from 0 to 131 within the sidelink S-SS/PSBCH block. The quantities k and 1 may represent the frequency and time indices, respectively, within one sidelink S-SS/PSBCH block.

**[Table 5]**

| Channel or signal | OFDM symbol number 1 relative to the start of an S-SS/PSBCH block | Subcarrier number k relative to the start of an S-SS/PSBCH block |
|---|---|---|
| S-PSS | 1, 2 | 2, 3, ..., 127, 128 |
| S-SSS | 3, 4 | 2, 3, ..., 127, 128 |
| Set to zero | 1, 2, 3, 4 | 0, 1, 129, 130, 131 |
| PSBCH | 0, 5, 6, ..., N^{S-SSB}_{symb}-1 | 0, 1, ..., 131 |
| DM-RS for PSBCH | 0, 5, 6, ..., N^{S-SSB}_{symb}-1 | 0, 4, 8, ..., 128 |

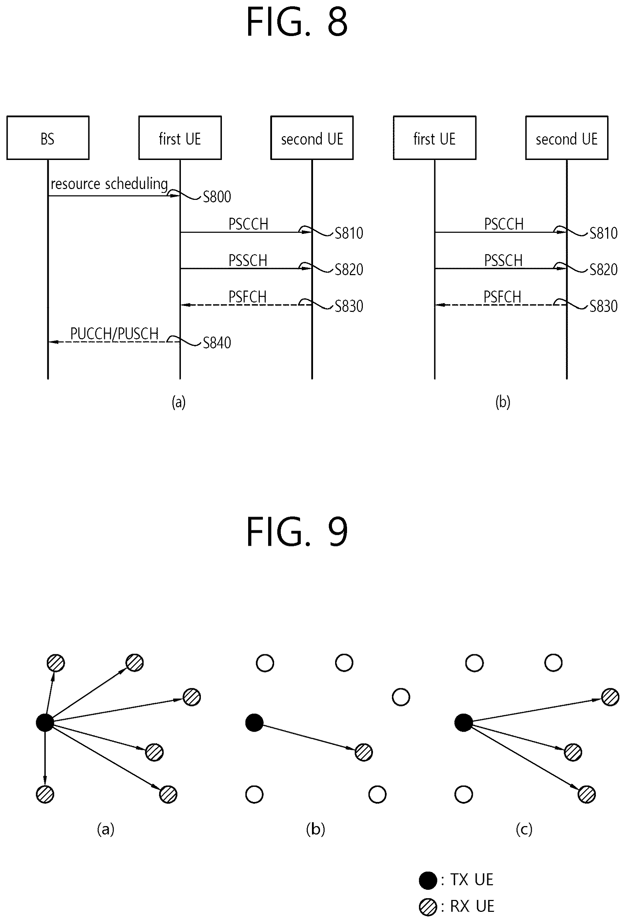

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1^{st}-stage SCI) to a second UE based on the resource scheduling. In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI:
- Resource pool index - ceiling (log₂ I) bits, where I is the number of resource pools for transmission configured by the higher layer parameter sl-TxPoolScheduling.
- Time gap - 3 bits determined by higher layer parameter sl-DCI-ToSL-Trans
- HARQ process number - 4 bits
- New data indicator - 1 bit
- Lowest index of the subchannel allocation to the initial transmission - ceiling (10g₂(N^{SL}_{subChannel})) bits
- SCI format 1-A fields: frequency resource assignment, time resource assignment
- PSFCH-to-HARQ feedback timing indicator - ceiling (log₂ N_{fb_timing}) bits, where N_{fb_timing} is the number of entries in the higher layer parameter sl-PSFCH-ToPUCCH.
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with pdsch-HARQ-ACK-Codebook = dynamic, 2 bits if the UE is configured with pdsch-HARQ-ACK-Codebook = semi-static
- Padding bits, if required

Referring to (b) of FIG. 8, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1^{st}-stage SCI) to a second UE by using the resource(s). In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format. For example, the 1^{st}-stage SCI format may include a SCI format 1-A, and the 2^{nd}-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ, is the number of DMRS patterns configured by higher layer parameter sl-PSSCH-DMRS-TimePatternList
- 2^{nd}-stage SCI format - 2 bits as defined in Table 6
- Beta_offset indicator - 2 bits as provided by higher layer parameter sl-BetaOffsets2ndSCI
- Number of DMRS port
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

**[Table 6]**

| Value of 2nd-stage SCI format field | 2nd-stage SCI format |
|---|---|
| 00 | SCI format 2-A |
| 01 | SCI format 2-B |
| 10 | Reserved |
| 11 | Reserved |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

**[Table 7]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

FIG. 9 shows three cast types, based on an embodiment of the present disclosure. The embodiment of FIG. 9 may be combined with various embodiments of the present disclosure. Specifically, (a) of FIG. 9 shows broadcast-type SL communication, (b) of FIG. 9 shows unicast type-SL communication, and (c) of FIG. 9 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, a hybrid automatic repeat request (HARQ) procedure will be described.

For example, the SL HARQ feedback may be enabled for unicast. For example, the SL HARQ feedback may be enabled for groupcast. For example, two HARQ feedback options may be supported for groupcast.
(1) Groupcast option 1: After the receiving UE decodes the PSCCH of which the target is the receiving UE, if the receiving UE fails in decoding of a transport block related to the PSCCH, the receiving UE may transmit negative acknowledgement (NACK) to the transmitting UE through a PSFCH. Otherwise, if the receiving UE decodes the PSCCH of which the target is the receiving UE and if the receiving UE successfully decodes the transport block related to the PSCCH, the receiving UE may not transmit positive acknowledgement (ACK) to the transmitting UE.
(2) Groupcast option 2: After the receiving UE decodes the PSCCH of which the target is the receiving UE, if the receiving UE fails in decoding of the transport block related to the PSCCH, the receiving UE may transmit NACK to the transmitting UE through the PSFCH. In addition, if the receiving UE decodes the PSCCH of which the target is the receiving UE and if the receiving UE successfully decodes the transport block related to the PSCCH, the receiving UE may transmit ACK to the transmitting UE through the PSFCH.

Hereinafter, UE procedure for reporting HARQ-ACK on sidelink will be described.

A UE can be indicated by an SCI format scheduling a PSSCH reception, in one or more sub-channels from a number of N^{PSSCH}_{subch} sub-channels, to transmit a PSFCH with HARQ-ACK information in response to the PSSCH reception. The UE provides HARQ-ACK information that includes ACK or NACK, or only NACK.

A UE can be provided, by sl-PSFCH-Period-r16, a number of slots in a resource pool for a period of PSFCH transmission occasion resources. If the number is zero, PSFCH transmissions from the UE in the resource pool are disabled. A UE expects that a slot t'ₖ^{SL} (0 ≤ k < T'ₘₐₓ) has a PSFCH transmission occasion resource if k mod N^{PSFCH}_{PSSCH} = 0, where t'ₖ^{SL} is a slot that belongs to the resource pool, T'ₘₐₓ is a number of slots that belong to the resource pool within 10240 msec, and N^{PSFCH}_{PSSCH} is provided by sl-PSFCH-Period-r16. A UE may be indicated by higher layers to not transmit a PSFCH in response to a PSSCH reception.If a UE receives a PSSCH in a resource pool and the HARQ feedback enabled/disabled indicator field in an associated SCI format 2-A or a SCI format 2-B has value 1, the UE provides the HARQ-ACK information in a PSFCH transmission in the resource pool. The UE transmits the PSFCH in a first slot that includes PSFCH resources and is at least a number of slots, provided by sl-MinTimeGapPSFCH-r16, of the resource pool after a last slot of the PSSCH reception.

A UE is provided by sl-PSFCH-RB-Set-r16 a set of M^{PSFCH}_{PRB,set} PRBs in a resource pool for PSFCH transmission in a PRB of the resource pool. For a number of N_{subch} sub-channels for the resource pool, provided by sl-NumSubchannel, and a number of PSSCH slots associated with a PSFCH slot that is less than or equal to N^{PSFCH}_{PSSCH}, the UE allocates the [(i+j·N^{PSFCH}_{PSSCH)·}M^{PSFCH}_{subch,slot}, (i+1+j·N^{PSFCH}_{PSSCH})·M^{PSFCH}_{subch,slot}-1] PRBs from the M_{PRB,set}^{PSFCH} PRBs to slot i among the PSSCH slots associated with the PSFCH slot and sub-channel j, where M^{PSFCH}_{subch,slot} = M^{PSFCH}_{PRB,set}/(N_{subch}·N^{PSFCH}_{PSSCH}), 0 ≤ i < N^{PSFCH}_{PSSCH}, 0 ≤ j < N_{subch}, and the allocation starts in an ascending order of i and continues in an ascending order of j. The UE expects that M^{PSFCH}_{PRB,set} is a multiple of N_{subch}·N^{PSFCH}_{PSSCH}.

A UE determines a number of PSFCH resources available for multiplexing HARQ-ACK information in a PSFCH transmission as R^{PSFCH}_{PRB,CS} = N^{PSFCH}_{type}·M^{PSFCH}_{subch,slot}·N^{PSFCH}_{CS} where N^{PSFCH}_{CS} is a number of cyclic shift pairs for the resource pool and, based on an indication by higher layers,
- N^{PSFCH}_{type} = 1 and the M^{PSFCH}_{subch,slot} PRBs are associated with the starting sub-channel of the corresponding PSSCH
- N^{PSFCH}_{type} = N^{PSSCH}_{subch} and the N^{PSSCH}_{subch}·M^{PSFCH}_{subch,slot} PRBs are associated with one or more sub-channels from the N^{PSSCH}_{subch} sub-channels of the corresponding PSSCH

The PSFCH resources are first indexed according to an ascending order of the PRB index, from the N^{PSFCH}_{type}·M^{PSFCH}_{subch,slot} PRBs, and then according to an ascending order of the cyclic shift pair index from the N^{PSFCH}_{CS} cyclic shift pairs.

A UE determines an index of a PSFCH resource for a PSFCH transmission in response to a PSSCH reception as (P_{ID} + M_{ID}) mod R^{PSFCH}_{PRB,CS} where P_{ID} is a physical layer source ID provided by SCI format 2-A or 2-B scheduling the PSSCH reception, and M_{ID} is the identity of the UE receiving the PSSCH as indicated by higher layers if the UE detects a SCI format 2-A with Cast type indicator field value of "01"; otherwise, M_{ID} is zero.

A UE determines a m₀ value, for computing a value of cyclic shift α, from a cyclic shift pair index corresponding to a PSFCH resource index and from N^{PSFCH}_{CS} using Table 8.

**[Table 8]**

| N^{PSFCH}_{CS} | m₀ | | | | | |
|---|---|---|---|---|---|---|
| | cyclic shift pair index 0 | cyclic shift pair index 1 | cyclic shift pair index 2 | cyclic shift pair index 3 | cyclic shift pair index 4 | cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

A UE determines a m_{cs} value, for computing a value of cyclic shift α, as in Table 9 if the UE detects a SCI format 2-A with Cast type indicator field value of "01" or "10", or as in Table 10 if the UE detects a SCI format 2-B or a SCI format 2-A with Cast type indicator field value of "11". The UE applies one cyclic shift from a cyclic shift pair to a sequence used for the PSFCH transmission.

**[Table 9]**

| HARQ-ACK Value | 0 (NACK) | 1 (ACK) |
|---|---|---|
| Sequence cyclic shift | 0 | 6 |

**[Table 10]**

| HARQ-ACK Value | 0 (NACK) | 1 (ACK) |
|---|---|---|
| Sequence cyclic shift | 0 | N/A |

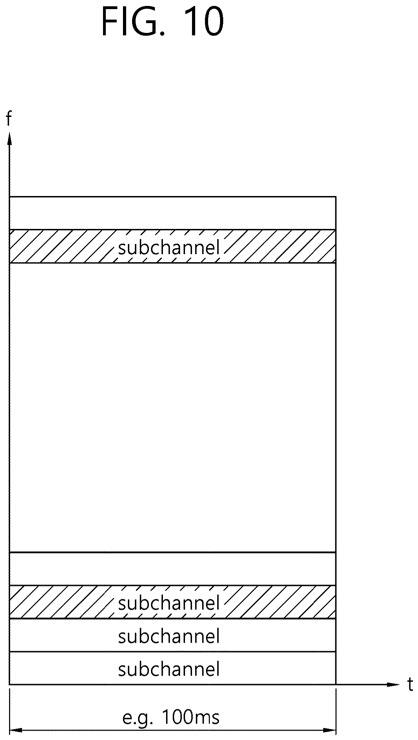

FIG. 10 shows a resource unit for channel busy ratio (CBR) measurement, based on an embodiment of the present disclosure. The embodiment of FIG. 10 may be combined with various embodiments of the present disclosure.

Referring to FIG. 10, CBR may denote the number of sub-channels in which a measurement result value of a received signal strength indicator (RSSI) has a value greater than or equal to a pre-configured threshold as a result of measuring the RSSI by a UE on a sub-channel basis for a specific period (e.g., 100 ms). Alternatively, the CBR may denote a ratio of sub-channels having a value greater than or equal to a pre-configured threshold among sub-channels for a specific duration. For example, in the embodiment of FIG. 10, if it is assumed that a hatched sub-channel is a sub-channel having a value greater than or equal to a pre-configured threshold, the CBR may denote a ratio of the hatched sub-channels for a period of 100 ms. Additionally, the CBR may be reported to the BS.

For example, if a PSCCH and a PSSCH are multiplexed, the UE may perform one CBR measurement for one resource pool. Herein, if a PSFCH resource is configured or pre-configured, the PSFCH resource may be excluded in the CBR measurement.

Further, congestion control considering a priority of traffic (e.g. packet) may be necessary. To this end, for example, the UE may measure a channel occupancy ratio (CR). Specifically, the UE may measure the CBR, and the UE may determine a maximum value CRlimitk of a channel occupancy ratio k (CRk) that can be occupied by traffic corresponding to each priority (e.g., k) based on the CBR. For example, the UE may derive the maximum value CRlimitk of the channel occupancy ratio with respect to a priority of each traffic, based on a predetermined table of CBR measurement values. For example, in case of traffic having a relatively high priority, the UE may derive a maximum value of a relatively great channel occupancy ratio. Thereafter, the UE may perform congestion control by restricting a total sum of channel occupancy ratios of traffic, of which a priority k is lower than i, to a value less than or equal to a specific value. Based on this method, the channel occupancy ratio may be more strictly restricted for traffic having a relatively low priority.

In addition thereto, the UE may perform SL congestion control by using a method of adjusting a level of transmit power, dropping a packet, determining whether retransmission is to be performed, adjusting a transmission RB size (MCS coordination), or the like.

Table 11 shows an example of SL CBR and SL RSSI.

**[Table 11]**

| SL CBR | |
|---|---|
| Definition | SL Channel Busy Ratio (SL CBR) measured in slot n is defined as the portion of sub-channels in the resource pool whose SL RSSI measured by the UE exceed a (pre-)configured threshold sensed over a CBR measurement window [n-a, n-1], wherein a is equal to 100 or 100·2^{µ} slots, according to higher layer parameter sl-TimeWindowSizeCBR. |
| Applicable for | RRC_IDLE intra-frequency, |
| | RRC_IDLE inter-frequency, |
| | RRC_CONNECTED intra-frequency, |
| | RRC_CONNECTED inter-frequency |

| SL RSSI | |
|---|---|
| Definition | Sidelink Received Signal Strength Indicator (SL RSSI) is defined as the linear average of the total received power (in [W]) observed in the configured sub-channel in OFDM symbols of a slot configured for PSCCH and PSSCH, starting from the 2nd OFDM symbol. |
| | For frequency range 1, the reference point for the SL RSSI shall be the antenna connector of the UE. For frequency range 2, SL RSSI shall be measured based on the combined signal from antenna elements corresponding to a given receiver branch. For frequency range 1 and 2, if receiver diversity is in use by the UE, the reported SL RSSI value shall not be lower than the corresponding SL RSSI of any of the individual receiver branches. |
| Applicable for | RRC_IDLE intra-frequency, |
| | RRC_IDLE inter-frequency, |
| | RRC_CONNECTED intra-frequency, |
| | RRC_CONNECTED inter-frequency |

Referring to Table 11, the slot index may be based on a physical slot index.

Table 12 shows an example of SL Channel Occupancy Ratio (CR).

**[Table 12]**

| | |
|---|---|
| Definition | Sidelink Channel Occupancy Ratio (SL CR) evaluated at slot n is defined as the total number of sub-channels used for its transmissions in slots [n-a, n-1] and granted in slots [n, n+b] divided by the total number of configured sub-channels in the transmission pool over [n-a, n+b]. |
| Applicable for | RRC_IDLE intra-frequency, |
| | RRC_IDLE inter-frequency, |
| | RRC_CONNECTED intra-frequency, |
| | RRC_CONNECTED inter-frequency |

| | |
|---|---|
| NOTE 1: a is a positive integer and b is 0 or a positive integer; a and b are determined by UE implementation with a+b+1 = 1000 or 1000·2^{u} slots, according to higher layer parameter sl-TimeWindowSizeCR, b < (a+b+1)/2, and n+b shall not exceed the last transmission opportunity of the grant for the current transmission. NOTE 2: SL CR is evaluated for each (re)transmission. NOTE 3: In evaluating SL CR, the UE shall assume the transmission parameter used at slot n is reused according to the existing grant(s) in slot [n+1, n+b] without packet dropping. NOTE 4: The slot index is based on physical slot index. NOTE 5: SL CR can be computed per priority level NOTE 6: A resource is considered granted if it is a member of a selected sidelink grant. | |

Meanwhile, in sidelink, carrier aggregation (CA) operation may be supported. For example, sidelink carrier (re)selection, synchronization of aggregated carriers, handling of the limited capability, power control for simultaneous sidelink transmissions, and/or packet duplication may be supported in sidelink CA operation. For example, this feature may be backward compatible with respect to the following. For example, a Rel-16/Rel-17 UE may receive Rel-18 sidelink broadcast/groupcast transmissions with CA for the carrier on which it receives PSCCH/PSSCH and transmits the corresponding sidelink HARQ feedback (when SL HARQ is enabled in SCI).

Meanwhile, when operating SL unicast based on multiple carriers, the SL RLF declaration criteria (for SL unicast session) need to be newly defined, unlike the case of using one carrier. Furthermore, it is necessary to avoid the automatic gain control (AGC) issue caused by multiple carrier-based transmissions and receptions (e.g., PSCCH/PSSCH transmissions and receptions, PSFCH transmissions and receptions, etc.). Based on various embodiments of the present disclosure, a method for performing communication based on carrier aggregation and an apparatus supporting the same are proposed.

For example, in the present disclosure, a TX UE may be interpreted as: a UE which transmits data (e.g., PSCCH/PSSCH) (to (target) RX UE(s)), and/or a UE which transmits SL CSI-RS (and/or SL CSI report request indicator) (to (target) RX UE(s)), and/or a UE which transmits (pre-defined) RS(s) (e.g., PSSCH DM-RS) to be used for SL (L1) RSRP measurement (and/or SL (L1) RSRP report request indicator) (to (target) RX UE(s)), and/or a UE which transmits a (control) channel (e.g., PSCCH, PSSCH) and/or RS(s) (e.g., DM-RS, CSI-RS) (on the (control) channel) to be used for SL radio link monitoring (RLM) operation (and/or SL radio link failure (RLF) operation) (of (target) RX UE(s)).

For example, in the present disclosure, an RX UE may be interpreted as: a UE which transmits SL HARQ feedback (to the TX UE), based on whether or not decoding of data received from the TX UE succeeds (and/or whether or not detection/decoding of a PSCCH (related to a PSSCH scheduling) transmitted by the TX UE succeeds), and/or a UE which transmits SL CSI (to the TX UE) based on SL CSI-RS(s) (and/or SL CSI report request indicator) received from the TX UE, and/or a UE which transmits a SL (L1) RSRP measurement value (to the TX UE) based on (pre-defined) RS(s) (and/or SL (L1) RSRP report request indicator) received from the TX UE, and/or a UE which transmits its own data (to the TX UE), and/or a UE which performs RLM operation (and/or RLF operation) based on a (pre-configured) (control) channel and/or RS(s) (on the (control) channel) received from the TX UE.

For example, in the present disclosure, the term "PSCCH" may be extended to or interpreted as SCI (and/or first SCI (or second SCI) and/or PSSCH), or vice versa. For example, in the present disclosure, the term "SCI" may be extended to or interpreted as PSCCH (and/or first SCI (or second SCI) and/or PSSCH), or vice versa. For example, in the present disclosure, the term "PSSCH" may be extended to or interpreted as second SCI (and/or PSCCH), or vice versa.

For example, in the present disclosure, the term "configuration/being configured (or definition/being defined)" may be interpreted as being (pre-)configured from a base station (or a network) (through pre-defined signaling (e.g., SIB, MAC, RRC)) (for each resource pool). For example, in the present disclosure, the term "configuration/being configured (or definition/being defined)" may be interpreted as being specified through signaling (e.g., PC5 RRC) pre-defined between UEs. For example, in the present disclosure, the term "RLF" may be extended to or interpreted as out-of-synch (OOS) and/or in-synch (IS), or vice versa. For example, in the present disclosure, the term "RB" may be extended to or interpreted as a subcarrier, or vice versa. For example, in the present disclosure, the term "packet (or traffic)" may be extended to or interpreted as a transport block (TB) (or MAC PDU), or vice versa. For example, in the present disclosure, the term "code block group (CBG) (or CG)" may be extended to or interpreted as a TB, or vice versa. For example, in the present disclosure, the term "source ID" may be extended to or interpreted as "destination ID", or vice versa. For example, in the present disclosure, the term "L1 ID" may be extended to or interpreted as "L2 ID", or vice versa. For example, in the present disclosure, the term "retransmission resource reservation/selection" may be extended to or interpreted as reservation/selection of potential retransmission resource(s) in which actual use is determined based on SL HARQ feedback information. For example, in the present disclosure, the term "sub-selection window" may be extended to or interpreted as a selection window (and/or a pre-configured number of resource sets within the selection window), or vice versa. For example, in the present disclosure, "SL mode 1 operation" may refer to a case where a base station directly schedules SL transmission resource(s) for a UE through pre-defined signaling (e.g., DCI), and "SL mode 2 operation" may refer to a case where a UE independently selects SL transmission resource(s) within a resource pool pre-configured (from a base station or a network). For example, in the present disclosure, the term "dynamic grant" may be extended to or interpreted as a configured (or SPS) grant (or a combination of the configured (or SPS) grant and the dynamic grant), or vice versa. For example, in the present disclosure, the term "configured grant" may be extended to or interpreted as "configured grant type 1" (or "configured grant type 2"), or vice versa. For example, in the present disclosure, the term "channel" may be extended to or interpreted as "signal", or vice versa. For example, in the present disclosure, the term "cast (type)" may be extended to or interpreted as "unicast (and/or groupcast and/or broadcast)", or vice versa. For example, in the present disclosure, the term "resource" may be extended to or interpreted as "slot" (or "symbol"), or vice versa. For example, in the present disclosure, the term "priority" may be extended to or interpreted as "logical channel prioritization (LCP)" (and/or "latency" and/or "reliability" and/or "minimum required communication range" and/or "prose per-packet priority (PPPP)" and/or "priority" and/or "SLRB" and/or "QoS profile/parameter" and/or "requirement"), or vice versa.

For example, for SL TX with SL CA, intra-band contiguous CA (supported in REL-15 RAN4), intra-band non-contiguous CA, and/or inter-band CA may be supported. Herein, for example, whether to simultaneously transmit/receive between inter-band carriers may be a UE capability.

For example, for SL RX with SL CA, intra-band contiguous CA (supported in REL-15 RAN4), intra-band non-contiguous CA (supported in REL-15 RAN4), and/or inter-band CA may be supported. Herein, for example, whether to simultaneously transmit/receive between inter-band carriers may be a UE capability.

For example, SL operation related spectrum combinations may be only intelligent transport system (ITS) band (supported in REL-15 RAN4), only licensed band, or ITS band and licensed band.

For example, the limited capability may be simultaneous SL TX (considered in REL-15) or simultaneous SL RX.

For example, a service class/type may be mapped per carrier. This may be supported in REL-15. For example, a service class/type may be mapped per SL BWP. In this case, for example, if there is one SL BWP per carrier, it may be considered the same as the per-carrier form. For example, there may be multiple SL BWPs within a carrier.

For example, the numerology (e.g., SCS) may be different between SL CA carriers/BWPs. For example, especially for intra-band CA, the numerology (e.g., SCS) may be different between SL CA carriers/BWPs.

For example, dynamic UL switching may result in different supportable combinations between SL and Uu, which may affect SL operation.

For example, if the numerology is different between SL CA carriers/BWPs, with respect to synchronization, a direct frame number (DFN) index may be inconsistent between carriers/BWPs, and/or the location/number of SLSS resources may be inconsistent between carriers/BWPs (e.g., this problem can be resolved with the limited configuration), and/or there may be an issue with synchronization accuracy (e.g., in the case of SL, since there is no transmission like Uu's TRX). For example, if the numerology is different between SL CA carriers/BWPs, handling of half-duplex/limited TX capability may be more difficult. For example, if the numerology is different between SL CA carriers/BWPs, transmissions of different TTI lengths may overlap, making power sharing more difficult, and implementation limitations may cause frequent events where some transmission domains are dropped.

For example, further enhancements considering the limited TX capability (for convenience of discussion, the number of carriers/BWPs capable of simultaneous transmission by REL-18 UE is named 'NUM_CC_SIMTX') may be proposed as follows.

For example, if the number of carriers/BWPs requiring simultaneous PSFCH transmission is greater than NUM_CC_SIMTX, PSFCH transmission prioritization may be performed first within a carrier/BWP, and PSFCH transmission prioritization may be performed next between carriers/BWPs. For example, the PSFCH transmission prioritization may be performed within the carrier/BWP. For example, the PSFCH transmission prioritization may be performed between the carriers/BWPs. For example, the highest priority of service(s) (of interest or all) mapped to the carrier(s)/BWP(s) and/or the highest priority of PSFCH(s) currently required for transmission per carrier/BWP and/or the carrier/BWP on which PSFCH transmission with a greater number of ACK information (and/or NACK information) is performed may be considered a relatively high priority.

For example, PSFCH transmission that satisfies the following condition(s) may be assumed, exceptionally, to have the highest priority, or may be (pre-)configured.
Example) REL-16/17 or pre-configured service class/type related PSFCH transmission (e.g., a release indication may be added on REL-18 SCI or MAC CE)
Example) Pre-configured message type (e.g., SCCH, MAC CE)
Example) PSFCH transmission related to (distance-based) NACK-only feedback
Example) PSFCH transmission related to pre-configured cast type (e.g., groupcast)

For example, in the case of unicast, the PSFCH half-duplex/limited capability issue may be mitigated by exchanging information (e.g., supported (transmit/receive) band combination, simultaneous transmit/receive capability information, preferred carrier for a peer UE considering its own reception band combination, etc.) between REL-18 UEs. For example, this operation may be useful, especially when considering new operations such as PSFCH feedback of the peer UE. For example, preferred (or supported) band combination information (of the peer UE) may be exchanged/reported between UEs (e.g., using an inter-UE coordination (IUC) container - (non-)preferred or already selected carrier information, etc.) or between the UE and the base station (e.g., mode 1). For example, the mode 1 TX UE may report RX band/carrier information supported by the peer UE to its base station, and the base station may efficiently determine a band/carrier to which mode 1 transmission resources of the TX UE are allocated by considering this. For example, when signaling IUC information, resources that exceed the CA capability may be signaled as non-preferred resources.

For example, the form in which a PSCCH/PSSCH carrier/BWP and an associated PSFCH carrier/BWP are configured differently may be supported. For example, this may be useful for unicast operation between REL-18 UEs. For example, additionally, a REL-18 dedicated resource pool or a PSFCH pool may be configured. However, this may not be easily utilized for communication with legacy UEs.

For example, transmission resource (re)selection may be performed considering PSFCH transmission/reception. For example, in the transmission resource (re)selection, when information related to when PSFCH transmission/reception is required on the same carrier/BWP is available, a slot in which PSFCH transmission is required may be prioritized. For example, in the transmission resource (re)selection, when information related to when PSFCH transmission/reception is required on different carriers/BWPs is available, a slot that overlaps with the time when PSFCH reception on different carriers/BWPs is required may be de-prioritized, or a slot that overlaps with the time when PSFCH transmission on different carriers/BWPs is required and (previous)/subsequent slots may be de-prioritized, on the carrier/BWP in which the transmission resource (re)selection is performed. For example, resource (re)selection at a time that overlaps with a PSFCH RX slot may be allowed, by considering a priority of data related to the resource (re)selection, the unsatisfaction of the requirements of the related data (e.g., PDB) due to a delay in the resource (re)selection, etc. For example, in this case, the PSFCH RX operation may be omitted. For example, in the case of different (or identical) channels overlapping between carriers (PSCCH/PSSCH + PSFCH) and/or different (or identical) TXs or RXs between carriers (TX + RX, TX + TX, RX + RX), as a solution to the above problem, REL-16/17 rules within a carrier may be applied first, and a form of prioritization between carriers may be considered based on the result. For example, similar to re-evaluation/preemption, reselection of selected/reserved resources that overlap with the location of PSFCH transmit/receive resources may be triggered. For example, the (de)prioritization criteria may be defined differently based on channel class/type, cast type, service/message class/type, etc.

For example, TX carrier reselection may be performed considering PSFCH transmission. For example, when reselecting a carrier, when information related to when PSFCH transmission is requested is available, priority may be given to being able to support the requested PSFCH transmission.

For example, the periodicity/location of PSFCH resources may be limited to be configured identically between carriers. For example, the periodicity/location of PSFCH resources may be limited to be configured identically between carriers, even if different carriers have different numerologies. This may, for example, mitigate the problem that PSFCH transmission on a particular carrier may cause PSSCH reception to be omitted during a slot duration on another carrier that (partially) overlaps with it.

For example, SL DRX operation may be supported in SL CA. For example, a per-carrier resource selection prioritization scheme (e.g., per-destination) considering a SL DRX pattern (e.g., active time) may be considered. For example, an associated PSFCH resource may be semi-statically/dynamically configured/adjusted to be located outside the active time. For example, to achieve this, the location of the selected PSSCH transmission resource (associated with the PSFCH) may be adjusted. For example, if the active time overlaps with PSFCH transmission, the SL DRX operation may be deactivated.

For example, for mode 1 PUCCH enhancements, it is necessary to support operation that PSFCH related SL HARQ information received on multiple carriers/BWPs, through PCELL (or PSCELL or PUCCH CELL), is reported simultaneously. For example, especially if a PSFCH period (and/or numerology), etc. is different for each carrier/BWP, PSFCH information of a reference carrier when configuring a PUCCH resource may be signaled, and/or carrier information related to SL HARQ information included on a PUCCH may be included, and/or a PUCCH resource is configured for each carrier, but a time window length for which the PUCCH is multiplexed may be configured, and/or the payload size may be determined for semi-static codebook operation. For example, PSFCH information for each carrier/BWP may be merged preferentially, and these may be finally merged between carriers/BWPs. In this case, for example, the order of merging between carriers/BWPs may be pre-configured.

For example, with respect to mode 1 CG, mode 1 operation may be enabled in SCG and/or whether there is a single mode 1 PUCCH cell or multiple mode 1 PUCCH cells (e.g., different PUCCH cells for each SL carrier set) may be configured, and a SL mode type may be configured differently between MCG and SCG.

For example, in mode 1 resource scheduling, with only SR/BSR (e.g., LCH/destination ID) information, the base station may not be able to determine which service packet transmission the UE wants to perform on which carrier. Therefore, for example, the BSR may additionally include information on a carrier on which the UE wants to perform packet transmission, or carrier (or destination) information may additionally be mapped per SR resource. For example, signaling for mapping LCH information may be defined per carrier.

For example, with respect to SL session management, the allowable unit of operation for a single unicast link may be a single carrier/BWP, or it may be multiple carriers/BWPs.

For example, in the case of unicast, an agreement procedure may be required for carriers/BWPs to be added/released (or activated/deactivated) between UEs. For example, PC5 RRC signaling may be utilized for this purpose, or a carrier/BWP-specific cause value may be introduced.

For example, in the case of groupcast, carrier selection between TX/RX UEs may be performed efficiently through the exchange of IUC (e.g., preferred/supported carrier information, radio link failure occurred carrier information).

For example, unicast link parameters may be configured per carrier/BWP. For example, unicast link parameters may be commonly configured between carriers/BWPs. For example, parameters related to SL communication on another carrier may be configured through one carrier.

For example, packet duplication in a SL unicast session may be configured through negotiation between UEs. In the present disclosure, the SL unicast session may be referred to as a SL PC5 RRC connection.

For example, when a SL unicast session controls multiple carriers/BWPs, discontinuous transmission (DTX) counting may be performed for SL radio link failure handling. For example, the DTX counting may be in a form that considers the sum of the number of DTX occurrences on the multiple carriers/BWPs. For example, the DTX counting may be in a form that considers the number of DTX occurrences per carrier/BWP. In this case, for example, if the number of consecutive DTX occurrences on a particular carrier/BWP exceeds a threshold value, the particular carrier/BWP may be deactivated/released. For example, the DTX counting may be in a form that only considers the number of DTX occurrences on a carrier/BWP on which session establishment-related signaling is transmitted/to be transmitted.

For example, if radio link failure (e.g., carrier failure) occurs in some carriers/BWPs among multiple carriers/BWPs, a SL unicast session may be maintained. In this case, for example, radio link monitoring and/or radio link failure operation may be performed across carriers. Therefore, for example, a SL unicast session may be maintained if radio link failure (e.g., carrier failure) occurs in some carriers/BWPs among multiple carriers/BWPs, and a SL unicast session may be terminated if radio link failure (e.g., carrier failure) occurs in all carriers/BWPs among multiple carriers/BWPs.

For example, if radio link failure (e.g., carrier failure) occurs in some carriers/BWPs among multiple carriers/BWPs, a SL unicast session may be terminated. In this case, for example, radio link monitoring and/or radio link failure operation may be performed per carrier.

For example, PC5 RRC signaling, a radio link failure indication, recovery signaling, etc. may be transferred through multiple carriers (rather than through one predefined carrier (e.g., carrier used for exchanging SL unicast link setup signaling)). For example, in mode 1, when reporting the occurrence of radio link failure, associated carrier/BWP information may also be transmitted. For example, carrier/BWP information on which unicast operation is performed with the peer UE may be reported to the base station. For example, in mode 1 operation with the peer UE, band combination information preferred by the peer UE, etc. may be reported to the base station.

For example, a mode 1 BSR/SR may be reported/configured per carrier (e.g., carrier indicator).

For example, for SL CA, in an LCP procedure, LCH data included in the MAC PDU generation may be determined by considering the carrier/BWP related numerology.

For example, multiple BWPs with different numerologies may be configured for each carrier, and a carrier may be selected based on available BWP selection, by considering requirements of LCH data.

For example, if the numerology is different between UL and SL, the SL may be deactivated. In this case, for example, carrier reselection may be triggered. Alternatively, for example, a SL BWP with the same numerology as the UL on the same carrier may be reselected,

For example, an inter-band asynchronous CA form may be supported in REL-18.

For example, for unicast SL CA, a TX/RX carrier for PC5-S signaling or PC5-RRC messages may be specified. For example, the TX/RX carrier may be a primary carrier or a lowest CBR carrier. For example, the TX/RX carrier may be specified by a SIB or a dedicated RRC. For example, the TX/RX carrier may be specified by a discovery message from the TX UE to the RX UE. For example, UEs may perform TX/RX for unicast link setup based on the specified carrier. In this case, for example, a separate resource pool may be established.

For example, the RX UE may need to be aware of the TX UE's carrier re-selection. For example, service-to-carrier mapping may be configured in unicast or may be configured through negotiation between UEs. For example, even in legacy unicast, the TX UE may select a single carrier based on service-to-carrier mapping. For example, this information may also be extended in unicast in SL CA. For example, in a CA situation, if one service is mapped to multiple carriers (C1, C2, C3, C4), the RX UE may not know which carrier the TX UE will select. For example, if the RX UE knows service information during PC5-S unicast link setup, the RX UE may monitor all of C1, C2, C3, and C4 based on service frequency mapping.

Step 1: The TX UE may be configured with C1, C2, C3, and C4 through RRC of the base station.

For example, the TX UE may determine the first activated CC (C1, C2, C3) and inform the RX UE through PC5-RRC. For example, the TX UE may transmit SCI or a SL MAC CE for activation (C1, C2, C3) to the RX UE. For example, (C1, C2, C3) may be selected by considering service mapping. For example, this may be beneficial in terms of RX capability and power saving.

For example, the TX UE may configure C1, C2, C3, and C4 through RRC to the RX UE.

For example, the RX UE may select an RX carrier. For example, if only unicast is considered, the RX UE may monitor all C1, C2, C3, and C4 at all times. For example, if only unicast is considered, the RX UE may only monitor (C1, C2, C3). In this case, problems may occur if the TX UE only moves to C4 during carrier reselection.

For example, the RX UE may select a TX carrier.

For example, considering only unicast, the RX UE may be configured with C1, C2, C3, and C4 through RRC of the base station. For example, the RX UE connected with the base station may request C1, C2, C3, and C4 from the base station.

For example, considering only unicast, the RX UE may configure carrier(s) among C1, C2, C3, and C4 selected by the TX UE. For example, the RX UE may configure unicast TX carrier(s) among C1, C2, C3, and C4 informed through RRC by the TX UE. For example, the carrier(s) informed by the TX UE may be TX carrier(s) of the TX UE or RX carrier(s) of the TX UE. For example, the RX UE may report C1, C2, C3, and C4 information to the base station.

For example, considering only unicast, the TX UE may inform the RX UE of available CC combinations, and the RX UE may select a CC combination. For example, the TX UE may inform the RX UE of available CC combinations, such as (C1, C2, C3), (C1, C2, C3, C4), (C3, C4, C5), etc., and the RX UE may select a CC combination.

For example, if there is another unicast or another GC/BC carrier, the RX UE may transmit a carrier preference to the TX UE. For example, the RX UE may request the TX UE to select TX resource(s) based on C3, C4, C5, and C6. For example, if the RX UE is currently performing TX or RX based on C5 and C6, the RX UE may request the TX UE to select TX resource(s) based on C3, C4, C5, and C6. For example, the RX UE may inform the TX UE that RX of the combination (C1, C2, C3) is not supported. In this case, for example, the RX UE may inform the TX UE of available combinations.

Step 2: The TX UE may perform SL mode 2 carrier reselection. For example, the TX UE may select the (C1, C2, C3) carrier as the (C2, C4) carrier.

For example, in SL mode 1, the base station may activate/deactivate through a DL MAC CE. For example, in SL mode 1, the base station may activate/deactivate through a DL MAC CE per destination. For example, this may affect SL CG activation/deactivation or PUCCH A/N codebook configuration. For example, the base station may regulate TX power saving (e.g., RF off for inter-band CA) of the TX UE and RX UE power saving. For example, the TX UE may activate/deactivate immediately after the application time. For example, in LTE SL CA, the UE may report carrier information per destination.

Step 3: The TX UE may transmit the SCI or the SL MAC CE for activation/deactivation to the RX UE.

For example, the TX UE may instruct (C2, C4). For example, it may be advantageous for the TX UE to instruct (C2, C4) prior to the final execution of carrier reselection. For example, if the (C2, C4) instruction is acknowledged late, and the reselection is CBR-based reselection, the TX UE may briefly hold (C1, C2, C3). For example, if the (C2, C4) instruction is acknowledged late, and the reselection is sidelink failure-based reselection, the definition of the default carrier may be required.

For example, if the RX UE receives the activation/deactivation from the TX UE, the RX UE may switch to (C2, C4). For example, the RX UE may transmit ACK (PSFCH or MAC CE based ACK or SCI based ACK) for activation/deactivation through C2 or C4.

For example, carrier reselection of the RX UE may also behave similarly to carrier reselection of the TX UE. For example, TX carrier(s) or RX carrier(s) of the TX UE may be preferentially selected as TX carrier(s) of the RX UE. For example, the TX UE may report preferred TX carrier(s) of the RX UE through an IUC MAC CE, etc. In this case, for example, the RX UE may select/reselect TX carrier(s) based on carrier information of the IUC.

For example, the TX UE and the RX UE may perform cell indexing. For example, the cell index may be specified through a PC5-RRC message. For example, an absolute radio frequency channel number (ARFCN)-to-cell index mapping may be used.

For example, there may be N_F PSFCH carriers for N_S PSSCH carriers for unicast. Herein, for example, N_F may be greater than or equal to 1 and less than or equal to N_S.

For example, in PSSCH carrier reselection, PSFCH carrier reselection may also be configured to be triggered. In the following embodiment, the carrier reselection may be performed as (C1, C2, C3) -> (C2, C4) -> (C1, C3).

For example, as in the prior art, a PSFCH carrier may be reselected based on TX carrier reselection. For example, from unicast/groupcast perspective, it may be advantageous if a TX carrier of the TX UE and a TX carrier of the RX UE are aligned. Otherwise, problems may occur in feedback transmission due to limitations in the TX capability of the RX UE. For example, if PSFCH transmission for C1 is possible, a feedback enabled channel may be mapped, and if PSFCH transmission for C2 is not possible, a feedback disabled channel may be mapped. For example, if carrier reselection is initiated for a particular feedback enabled logical channel, carrier reselection may be performed by considering a PSFCH transmission capability of the RX UE and/or a carrier with PSFCH transmission resources. For example, if carrier reselection is initiated for a particular feedback disabled logical channel, carrier reselection may be performed without considering the PSFCH transmission capability of the RX UE. For example, for carrier(s) transmitted by a legacy UE and carrier(s) for groupcast transmission, feedback transmission may need to be performed. In this case, such carrier(s) may be preferentially selected as TX carrier(s). For example, based on the TX carrier prioritization scheme, multiple PSFCH simultaneous transmissions or PSSCH/PSFCH simultaneous transmissions may be performed.

For example, if it was previously C1 PSFCH, it may be switched to C2 or C4. For example, C2 or C4 may be indicated by the TX UE (through SCI or a MAC CE). In this case, it may be advantageous to indicate a PSFCH carrier, for example, with scheduling SCI. For example, C2 or C4 may be indicated by the RX UE (through a MAC CE). In this case, for example, if the TX UE indicates activation/deactivation, the RX UE may indicate the PSFCH carrier through confirmation SCI or MAC CE.

For example, it may always be configured to be C1, regardless of carrier reselection. For example, the TX UE may semi-statically configure/change through RRC. For example, the base station may be configure/change through RRC.

For example, it may be configured to be the lowest C2 or the highest C4 in carrier reselection. In this case, for example, it may be configured based on a criterion for instructing the TX UE to activate/deactivate.

For example, it is necessary to reconstruct multiplexed HARQ-ACK information of multi-carrier in PSFCH transmission in PSSCH carrier reselection. In the following embodiment, carrier reselection may be performed as (C1, C2, C3) -> (C2, C4) -> (C1, C3). For example, in HARQ-ACK information, the carrier order may be based on the carrier index specified by the TX UE through RRC, and/or based on the carrier index of the MAC CE activation/deactivation of the TX UE, and/or based on the carrier index specified by the base station through RRC. For example, long format for Rel-18 PSFCH may not be supported.

For example, multiple PSFCH transmissions may be supported in Rel-18 SL CA. For example, for single carrier-to-multiple PSFCH mapping, the RX UE may transmit multiple PSFCHs based on CDM/TDM/FDM. For example, for multiple carrier-multiple PSFCH mapping, the RX UE may transmit multiple PSFCHs based on CDM/TDM/FDM. For example, for both the single carrier-multiple PSFCH mapping scheme and the multiple carriers-multiple PSFCH mapping scheme, there may be PSFCH prioritization issues.

For example, in the case of packet duplication, broadcast/groupcast packet duplication may not be a problem for a legacy UE. For example, for SL mode 2, a carrier for packet duplication may change due to carrier reselection. In this case, for example, a primary path may change based on the lowest carrier index and/or the lowest CBR, and a secondary path may change based on the lowest carrier index and/or the lowest CBR, among the remaining carriers that are not the primary path. For example, the current Uu duplication activation/deactivation MAC CE may only support activation/deactivation per DRB ID. For example, for SL mode 1, the base station may transmit a SL duplication activation/deactivation MAC CE to the TX UE. In this case, for example, a destination index field may be added, and/or a primary carrier may be specified per destination or per SLRB or per priority, and/or a priority or CBR measurement information per carrier index may be specified. For example, the priority or CBR measurement information per carrier index may be utilized to specify a primary path, and/or the priority or CBR measurement information per carrier index may be utilized for LCP. For example, the TX UE may transmit a SL duplication activation/deactivation MAC CE to the RX UE. For example, in unicast, this can be useful since the TX UE can configure bearer(s), but in groupcast/broadcast, this can be difficult since the duplication decision may be based on a logical channel ID value (as in LTE). For example, the duplication decision may be indicated per SLRB or per priority (as in LTE), and/or carrier combination(s) for duplication may be indicated per SLRB or per priority.

For example, in the case of SL failure, carrier reselection may be performed. For example, the SL failure may be RLC retransmission (per bearer mapped to carrier(s)) per UE and/or HARQ feedback (per carrier) and/or reconfiguration failure (per UE) and/or IP check failure (per bearer mapped to carrier(s)) per UE and/or a PC5-S keep-alive signal.

For example, SL HARQ feedback based RLM may be performed. For example, multiple RLMs may be performed on each carrier. For example, one RLM may be performed on only one carrier. Herein, for example, the carrier may be a carrier where the PC5-RRC connection has been established and/or a carrier indicated by the TX UE. For example, one RLM may be performed for aggregated carriers. For example, this is a different behavior than Uu, carrier reselection needs to be reflected, and may be considered in the case of one PSFCH carrier for multiple PSSCH carriers.

For example, a primary sidelink carrier may be configured. In this case, for example, PC5 RLM may be performed, similar to Uu.

For example, in the case of unicast, the TX UE may inform the RX UE of SL failure (for a particular carrier). In this case, for example, in the case of SL failure of a particular carrier, it may be necessary to avoid selecting the particular carrier as a TX carrier.

For example, in the case of unicast, the TX UE may not inform the RX UE of SL failure (for a particular carrier). In this case, for example, PC5-RRC may be released due to SL failure as in the prior art.

For example, SL failure for one carrier may occur (e.g., SL carrier on a carrier where HARQ feedback based SL failure or RLC retransmission failure has occurred). In this case, for example, the SL mode 2 TX UE may perform carrier reselection to a primary/default carrier (if the RX UE is not monitoring all carriers), and the SL mode 2 TX UE may perform carrier reselection to an any carrier (configured by PC5-RRC) (if the RX UE is monitoring all carriers). Herein, for example, multiple default carriers may be specified, and/or the RX UE may switch to the default carrier and perform reception when SL failure is detected.

For example, SL failure for one carrier may occur (e.g., SL carrier on a carrier where HARQ feedback based SL failure or RLC retransmission failure has occurred). In this case, for example, the SL mode 1 TX UE may report this to the base station. For example, the base station may reselect the carrier and activate/deactivate the SL carrier. For example, both the destination and the carrier where SL failure has occurred may be reported. For example, in SL mode 1, per-carrier RLM may be meaningful. For example, through this, it is possible to prevent the base station from scheduling the corresponding carrier. However, in this case, for example, the UE may use the corresponding carrier for another destination.

For example, the TX UE may activate/deactivate a carrier by informing the RX UE of SL failure. For example, carrier reselection may be performed, such as (C1, C2, C3) -> (C2, C4). For example, the TX UE may activate/deactivate a carrier by informing the RX UE of SL failure through the common active C2 or the primary/default carrier. For example, the SL failure may be informed through an RRC message or a MAC CE. For example, a carrier to switch to in the case of SL failure may be indicated, and/or the RX UE may switch reception to the indicated carrier. For example, if no carrier is indicated, the RX UE may switch to the default carrier. For example, if there is no default carrier, the RX UE may switch to the lowest index or CBR carrier.

For example, if only the RX UE detects SL failure, the RX UE may start a timer. For example, the RX UE may switch TX/RX to the primary/default carrier after the timer expires. For example, if there is no default carrier, the RX UE may switch to the lowest index or CBR carrier. Thereafter, for example, PC5-RRC may be released according to the conventional procedure.

For example, a MAC CE carrier may be specified. For example, the base station or the TX UE may specify SL carrier(s) on which the above/legacy MAC CEs may be transmitted. For example, a MAC CE may be transmitted only on a primary carrier, or a MAC CE may be transmitted on a carrier with the lowest CBR. For example, a particular MAC CE may be transmitted on a particular carrier, while other MAC CEs (IUC MAC CE) may be transmitted on any carrier.

For example, since a synchronization carrier is currently specified, a PSBCH may be transmitted only on the current synchronization carrier.

For example, a frequency may be entered in SL AS security input parameters. In this case, for example, the frequency may be based on a primary carrier. For example, a frequency on which PC5-S and PC5-RRC messages were exchanged may be specified as the primary carrier. For example, based on LTE CA, the primary carrier may be selected based on the lowest CBR. For example, if the primary carrier is reselected, there may be an issue of how to specify the primary carrier again. For example, the TX UE may reconfigure the primary carrier to the RX UE through RRC or specify it through a MAC CE/SCI.

For example, for groupcast SL CA, similar to the unicast approach above, MAC CE based activation/deactivation of the base station/TX UE may be used. In this case, for example, confirmation ACK may be supported based on NACK-only or based on a MAC CE.

For example, for broadcast SL CA, MAC CE based activation/deactivation of the TX UE may be configured. For example, since a carrier where a legacy RX UE resides cannot be deactivated, it may be difficult to coexist with the legacy RX UE. For example, this may not be useful in a resource pool coexisting with the legacy UE, but may be used in a Rel-18 resource pool. For example, broadcast SL CA may behave as much as possible like legacy LTE CA.

For example, for LTE SL CA operation, the UE may report only {Destination Index 0, LCG1, X}, and/or the base station may determine, based on sidelink UE information, that both f1 and f2 are related to this destination ID and may provide resource grant(s) on f1(X-Y) and f2(Y) to jointly carry data volume X. Herein, for example, Y may be a value between (0, X). For example, the above LTE SL CA operation may also be applied to an NR SL BSR.

For example, for LTE/NR PDCP packet duplication, an LTE SL BSR and an NR SL BSR may indicate a buffer size for the same destination. In this case, for example, the 100% redundant buffer size may be reported. In this case, for example, both RATs receive the report, and different schedulers may experience excessive resource allocation issues. Alternatively, for example, a buffer size may be reported preferentially (only one side reported) through the NR BSR or the LTE BSR per destination, per LCG, or per UE. In this case, for example, the base station may configure NR or LTE or both. For example, since NR/LTE schedulers may be different, only one RAT may be scheduled when reporting to one RAT. For example, if the buffer size is reported preferentially (only one side is reported) through the NR BSR or the LTE BSR per destination, per LCG, or per UE, the base station may determine the reporting target depending on the implementation status of the LTE/NR base station. In this case, for example, a PDCP PDU of NR PDCP may be transmitted by LTE RLC/MAC.

For example, for SL CG, the TX UE may report preferred/non-preferred TX carrier(s) (per destination). For example, the base station may configure SL CG on the preferred TX carrier(s), and/or SL CG on the non-preferred TX carrier(s) may be deactivated or released, and/or SL CG-to-one or more destinations mapping may be configured.

For example, for a SL carrier, SL carrier-to-one or more destinations mapping may be configured for LCP, and/or a destination or a (current) SL carrier may be specified by DCI.

For example, when multiple PSFCHs are transmitted on a particular carrier, power splitting between carriers may be performed. In this case, for example, P_CMAX may be defined.

For example, in resource (re)selection, an operation/condition that makes FDM resource selection between carriers a lower priority may be defined.

For example, even if an SCS value is the same between carriers, the starting symbol location/number of symbols, CP length, etc. may be limited to be the same between carriers to mitigate AGC issues.

For example, when multiple TBs with different QoS profiles/destinations are simultaneously transmitted on multiple carriers, a SL DRX operation method may be defined.

For example, a DTX counting method and a SL RLF final declaration condition between multiple carriers for unicast may be defined. For example, this may be limited to a carrier agreed between UEs and/or a carrier with the lowest index, etc. For example, the DTX counting and the SL RLF final declaration may be performed considering only carriers for which PSFCH resources are configured among multiple unicast-related carriers.

For example, when SL RLF counting is performed considering carrier(s) for which PSFCH resource(s) is configured, carrier(s) for which PSFCH resource(s) is not configured may not be utilized for SL RLF declaration.

For example, for packet duplication, since PPPR is not defined in NR SL, the granularity of a packet duplication configuration in NR SL CA may be configured differently per RB or per LCH or per SRB/DBR, or may be configured differently per message type/content.

For example, there may be conditions other than PPPR to perform packet duplication. For example, the network may configure allowing packet duplication operation, and the UE may determine whether to actually perform packet duplication based on whether a pre-configured condition is satisfied. In this case, for example, based on CBR, a packet size, a QoS profile (where parameters such as latency may be considered as additional conditions), a priority, a number of PSFCH NACK feedback/DTX occurrences, SL CSI information, whether to occur SL RLF, etc., the UE may determine whether to actually perform packet duplication.

For example, the UE may request the base station or the peer UE to perform packet duplication operation. For example, the packet duplication operation may be requested if the RX UE has consecutively failed to decode received data, and/or if SL RLF has occurred.

For example, in LTE SL CA, service mapping may be performed per carrier. For example, in NR SL CA, service mapping may also be performed per carrier.

For example, the granularity of PC5 RRC reconfiguration operation (e.g., RB, SLDRX) may be defined. For example, the granularity of the PC5 RRC reconfiguration operation (e.g., RB, SL DRX) may be per carrier. For example, the granularity of the PC5 RRC reconfiguration operation (e.g., RB, SL DRX) may be per PC5 RRC connection. For example, transmission of a PC5 RRC reconfiguration related complete message may be limited to a carrier on which the PC5 RRC reconfiguration was received. For example, the granularity of a PC5 RRC reconfiguration related T400 timer configuration may be defined.

For example, transmitting/receiving of a particular message (e.g., PC5 RRC message, SRB message, etc.) may be limited per carrier. For example, a carrier on which the particular message is transmitted/received may be selected/limited by a carrier index. For example, a carrier on which the particular message is transmitted/received may be selected/limited by a SL CSI value, a number of NACK occurrences, a CBR measurement value of the carrier, etc.

For example, a condition under which carrier reselection is triggered or a resource reselection condition (e.g., whether SL RLF occurs) may be defined.

For example, if RLF occurs for unicast, resource selection may be performed excluding multiple associated carriers. Furthermore, for example, if a pre-configured timer expires, the multiple carriers may be used again for resource selection.

For example, in carrier reselection, if a packet to be transmitted is SL HARQ ENABLED, a carrier may be limitedly selected using a CBR measurement value among carriers for which PSFCH resources are configured. For example, among carriers that are allowed to transmit a HARQ feedback ENABLED packet, only carriers for which PSFCH resources are configured may be filtered. In addition, for example, a carrier with the lowest CBR measurement value may be selected among carriers with a CBR measurement value lower than a CBR threshold value associated with a packet priority among the carriers.

For example, in the SL CA environment, when the UE transmits sidelink UE information to the base station, a carrier index may be included in the sidelink UE information.

For example, a latency bound may be configured between unicast UEs (e.g., through SL CSI and/or IUC). In this case, for example, the granularity of the latency bound may be per PC5 RRC connection. Alternatively, for example, the granularity of the latency bound may be per carrier. For example, the latency bound may be configured per PC5 RRC connection, even though SL CSI triggering/feedback is performed per carrier.

For example, in the case of IUC operation, IUC request/IUC information transmission (scheme 1) and conflict indicator transmission for UE-B resource reservation (scheme 2) may be limited per carrier.

For example, CBR measurement may be performed per carrier, and when reporting it to the base station, a carrier index may be reported along with it.

For example, in the case of SL RLF occurrence, a SL RLF occurrence indicator and a carrier index may be reported together to the base station or a higher layer of the UE (e.g., when reporting a PC5 link identifier).

For example, PSFCH time resources may be overlapped between SL CA carriers.

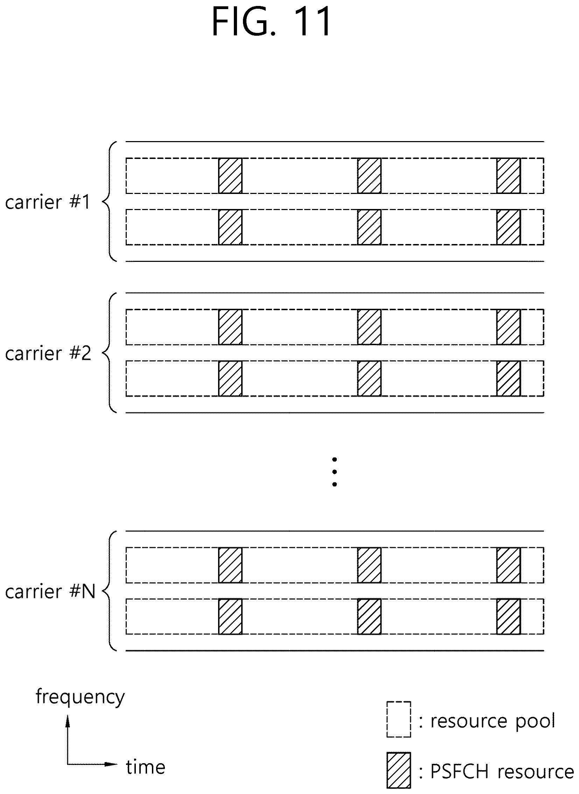

FIG. 11 shows an example of overlapping PSFCH time resources between multiple carriers, based on an embodiment of the present disclosure. The embodiment of FIG. 11 may be combined with various embodiments of the present disclosure.

Referring to FIG. 11, PSFCH time resources may be overlapped between SL CA carriers. This may mitigate AGC issues caused by PSFCH transmission and reception. For example, clarification may be needed on the exact meaning of overlapping PSFCH time resources between SL CA carriers. For example, in the case of overlapping PSFCH time resources, PSFCH resources may be configured only for resource pools that overlap in a time domain with resource pools for which PSFCH resources are configured on different carriers, and the location of the PSFCH time resources may be the same. For example, in the case of overlapping PSFCH time resources, if PSFCH resources are configured for (some) resource pools on a particular carrier, PSFCH resources may be configured for resource pools on all carriers of SL CA, and the location of the PSFCH time resources may also be the same. For example, in the case of overlapping PSFCH time resources, PSFCH resources may not be configured for resource pools that overlap in the time domain with resource pools for which PSFCH resources are configured on different carriers, and the SL symbol start location/number may be configured to be equal to SL slots on the pools for which PSFCH resources are configured, or SL symbol start location/number parameters may be configured independently for a slot that overlaps with an actual PSFCH slot and a slot that do not overlap with the actual PSFCH slot. For example, resource pools for which PSFCH resources are configured and resource pools for which PSFCH resources are not configured may not overlap in the time domain between different carriers. For example, the location of the PSFCH time resources may be configured to be the same between different carriers, but the location of the PSFCH frequency resources/PSSCH-to-PSFCH minimum gap, etc. may be configured independently.

For example, for a packet with HARQ feedback ENABLED, carrier reselection operation may be limited to carrier(s) for which PSFCH resources are configured. In this case, if none of carriers for which PSFCH resources are configured satisfies a predefined condition (e.g., CBR), carrier reselection may be performed by changing the characteristics to HARQ feedback DISABLED.

For example, a PSFCH TX or RX capability may be defined. For example, the PSFCH TX or RX capability may be defined independently per carrier or per broadcast, or a capability may be defined for a particular carrier and the capability may be applied equally to the remaining SL CA carriers.

For example, a power split method between SL/UL may be defined for combinations of "multiple SL carriers + single UL carrier" and/or "multiple SL carriers + multiple UL carriers".

For example, the start location and length of sidelink symbols may be aligned between carriers, even if SCS is the same between carriers.

For example, in SL CA, SL DRX may be operated in a single pattern for multiple carriers. In this case, for example, when transmitting or receiving multiple unicast target UE/QoS profile packets simultaneously, the criteria for generating a SL DRX pattern may be defined.

For example, an RB configuration, a SL CSI latency budget, an IUC MAC CE, etc. may be configured/operated per PC5 RRC connection or per carrier.

For example, half-duplex issues may still exist (for intra-band CA). Thus, for example, resources that overlap (in the time domain) with resources selected on another carrier may not be selected as transmission resources. For example, for power sharing avoidance, high priority degradation protection, etc., resources that overlap (in the time domain) with resources selected on another carrier may not be selected as transmission resources.

For example, when transmitting a PSFCH on a particular carrier, it may not be possible to receive a PSFCH on all other carriers. To address this, for example, prioritization between PSFCH TX/RX may be performed, and/or prioritization between PSFCH TX/TX may be performed.

For example, if the numerology is different between carriers, due to a TX-RX switching gap, PSFCH resources, etc., the emission to a particular carrier may vary, and AGC problems may occur. For example, the numerology may be limited to be the same between carriers.

For example, when splitting PSFCH power between carriers, a representative PSFCH priority may be configured, and power may be split between carriers. Alternatively, for example, when splitting PSFCH power between carriers, power may be split between carriers across carriers. For example, in particular, considering that transmit power values need to be the same between multiple PSFCH transmissions within a carrier, power may be split between carriers across carriers. For example, P_CMAX may be defined considering multiple carriers simultaneously.

For example, RSRP feedback and/or CSI feedback may be performed across carriers. In this case, for example, the RSRP feedback and/or the CSI feedback may include carrier indicator information. For example, a CSI feedback latency configuration may be configured per carrier. For example, a CSI feedback latency configuration may be commonly configured for carriers.

For example, due to differences in numerology between carriers, issues may arise in AGC and the half-duplex problem may become more serious. To address this, for example, operation based on a higher SCS value filling slots (boundaries) of a lower SCS value (or at least filling the first slot of a lower SCS value) may be supported. For example, a PSFCH period may be defined in terms of aggregated slots.

For example, SL RLF may be operated per PC5 RRC connection, and SL RLF may be operated based on some of CA carriers (e.g., a carrier with the highest CBR, or a carrier with the highest packet priority to be transmitted, or a carrier agreed between unicast UEs) or all of CA carriers (e.g., DTX counting). For example, a primary/secondary carrier may be defined per PC5 RRC connection. For example, the primary carrier may be the same as some of the carrier selection criteria above.

The various methods of the present disclosure may be applied differently per unicast session (group) and/or per cast type and/or per transmission priority value and/or per reception priority value and/or per SL transmission with SL HARQ-ACK feedback enabled/disabled and/or per SL HARQ-ACK feedback option and/or per QoS parameter and/or per (remaining) PDB and/or per congestion control level and/or per (transmission and/or reception) resource pool and/or per mobility related information of the UE (e.g., velocity, speed, direction, acceleration, position, height, etc.) and/or per sidelink transmission or reception and/or per HARQ process and/or per beam process and/or per source ID and/or per destination ID and/or per TB. For example, in the embodiment of the present disclosure, the units of the (pre-)configuration may be configured in the form of the different combinations. For example, in the embodiment of the present disclosure, parameter instruction and management through a PSCCH and/or a PSSCH may be performed on a per unit basis in the form of the different combinations. In the embodiment of the present disclosure, spatial setting and/or transmission configuration indicator (TCI) information and/or quasi-co-location (QCL) information, etc. may refer to each other and/or may be substituted and interpreted as beam-related information, beam direction, spatial domain transmission or reception filter, etc. In the embodiment of the present disclosure, having the same spatial setting information for transmitting may mean that spatial domain TX filters of the UE are the same for two different transmit signals. In the embodiment of the present disclosure, having the same spatial setting information for receiving may mean that two different receive signals have a QCL 'TYPE D' relationship and/or use the same spatial RX parameter. The various methods of the present disclosure may be applied differently for different SL channels. The various methods of the present disclosure may be applied differently based on the type of information included in the SL channel.

For example, whether or not the above rule is applied (and/or the parameter value related to the proposed method of the present disclosure) may be configured/allowed specifically (or differently or independently) (and/or the application of the above rule may be configured/allowed limitedly) based on at least one of the following elements/parameters (or for each of the following elements/parameters) comprising: a service type (and/or a (LCH or service) priority) and/or a QoS requirement (e.g., latency, reliability, minimum communication range) and/or a PQI parameter) (and/or HARQ FEEDBACK ENABLED (and/or DISABLED) LCH/MAC PDU (transmission) and/or a CBR measurement value of a resource pool and/or a SL cast type (e.g., unicast, groupcast, broadcast) and/or a SL groupcast HARQ feedback option (e.g., NACK ONLY feedback, ACK/NACK feedback, TX-RX distance-based NACK ONLY feedback) and/or a SL mode 1 CG type (e.g., SL CG type 1/2) and/or a SL mode type (e.g., mode 1/2) and/or a resource pool and/or whether a PSFCH resource is configured for a resource pool and/or whether periodic resource reservation operation (and/or aperiodic resource reservation operation) is allowed/configured (or not allowed/configured) for a resource pool and/or whether partial sensing operation (and/or random resource selection operation (and/or full sensing operation)) is allowed/configured (or not allowed/configured) for a resource pool and/or a source (L2) ID (and/or a destination (L2) ID) and/or a PC5 RRC connection link and/or a SL link and/or a connection state (with a base station) (e.g., RRC CONNECTED state, RRC IDLE state, RRC INACTIVE state) and/or a SL HARQ process (ID) and/or whether SL DRX operation (of a TX UE or an RX UE) is performed and/or whether it is a power saving (TX or RX) UE and/or a case where (from the perspective of a particular UE) PSFCH TX and PSFCH RX (and/or multiple PSFCH TXs (exceeding a UE capability)) overlap (and/or PSFCH TX (and/or PSFCH RX) is skipped) and/or a case where an RX UE actually (successfully) receives a PSCCH (and/or PSSCH) (re)transmission from a TX UE and/or a case where a (TX) UE performing packet transmission (and/or transmission resource (re)selection) performs power saving operation (and/or SL DRX operation) and/or a case where a target (RX) UE of packet transmission performs power saving operation (and/or SL DRX operation) and/or a case where the remaining PDB value related to packet transmission is greater than or equal to (or less than or equal to) a pre-configured threshold and/or a case of (TB-related) initial transmission (and/or retransmission) and/or a case where an interlace-based (RB) structure is applied and/or a case where a (pre-configured) channel access type (e.g., Type 1, Type 2A, Type 2B, Type 2C, semi-static channel occupancy) is performed and/or a case where a (pre-configured) SL channel/signal (e.g., SL SSB, PSCCH, PSSCH, PSFCH) is transmitted/received and/or an RB set (and/or channel and/or carrier) (on which channel access operation is performed in an unlicensed band) and/or a channel occupancy time (COT) and/or a TX burst and/or a discovery burst). In addition, combinations of the proposed methods (and/or proposed rules and/or embodiments) described in the present disclosure may be applied. Further, in the present disclosure, the term "configuration/being configured" (or "designation/being designated") may be extended to or interpreted as a form that the base station informs the UE through a pre-defined (physical layer or upper layer) channel/signal (e.g., SIB, RRC, MAC CE) (and/or a form provided through pre-configuration and/or a form that the UE informs another UE through a pre-defined (physical layer or upper layer) channel/signal (e.g., SL MAC CE, PC5 RRC)). In addition, the term "PSFCH" in the present disclosure may be extended to or interpreted as "(NR or LTE) PSSCH (and/or (NR or LTE) PSCCH) (and/or (NR or LTE) SL SSB (and/or UL channel/signal))" (or vice versa). In addition, the proposed methods of the present disclosure may be combined with each other and extended (in new forms). In addition, in the present disclosure, the term "ACTIVE TIME" (and/or "ON DURATION") may be extended to or interpreted as "ON DURATION" (and/or "ACTIVE TIME") (or vice versa).

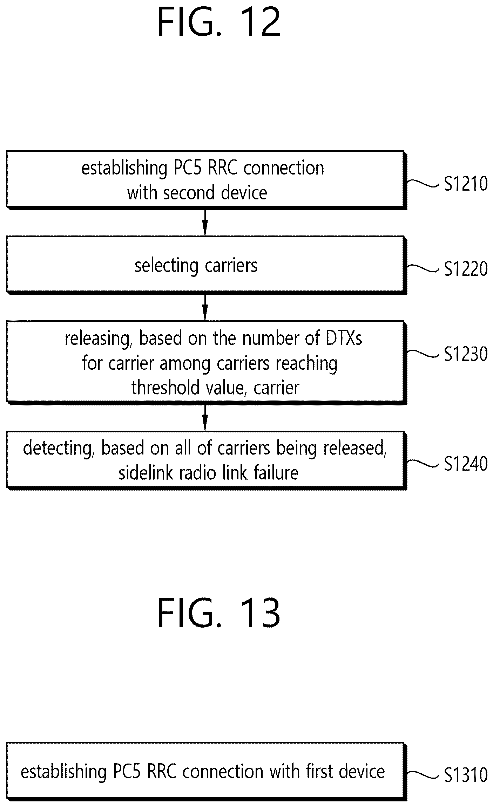

FIG. 12 shows a method for a first device to perform wireless communication, based on an embodiment of the present disclosure. The embodiment of FIG. 12 may be combined with various embodiments of the present disclosure.

Referring to FIG. 12, in step S1210, the first device may establish a PC5 radio resource control (RRC) connection with a second device. In step S1220, the first device may select a plurality of carriers. In step S1230, the first device may release, based on a number of consecutive discontinuous transmissions (DTX) for a carrier among the plurality of carriers reaching a threshold value, the carrier. In step S1240, the first device may detect, based on all of the plurality of carriers being released, a sidelink radio link failure.

For example, based on detecting the sidelink radio link failure, the PC5 RRC connection may be released.

For example, based on some of the plurality of carriers being released, the PC5 RRC connection may be kept.

For example, based on data to be transmitted by the first device being set to hybrid automatic repeat request (HARQ) feedback enabled, the plurality of carriers may be selected among carriers (i) for which a physical sidelink feedback channel (PSFCH) resource is configured and (ii) with a channel busy ratio (CBR) measurement value less than a CBR threshold value. For example, the CBR threshold value used to select the plurality of carriers may be related to a priority of the data.

For example, the plurality of carriers may be carriers related to the PC5 RRC connection.

For example, prioritization for PSFCH transmission may be performed across the plurality of carriers.

For example, PSFCH resources on the plurality of carriers may be aligned in a time domain.

For example, a frequency domain of PSFCH resources or a minimum time gap between PSFCH and physical sidelink shared channel (PSSCH) may be configured independently for the plurality of carriers.

For example, a location of a sidelink start symbol, a number of sidelink symbols, a cyclic prefix, and a subcarrier spacing may be configured equally for the plurality of carriers.

Additionally, for example, the first device may report information related to the carrier to the base station, based on the number of consecutive DTXs for the carrier among the plurality of carriers reaching the threshold value.

Additionally, for example, the first device may transmit, to the second device, information on whether packet duplication is supported.

Additionally, for example, the first device may transmit, to the second device, a first PC5 RRC message for carrier addition or modification. Additionally, for example, the first device may receive, from the second device, a second PC5 RRC message for completion of the carrier addition or modification.

The proposed method can be applied to devices based on various embodiments of the present disclosure. First, the processor 102 of the first device 100 may establish a PC5 radio resource control (RRC) connection with a second device. In addition, the processor 102 of the first device 100 may select a plurality of carriers. In addition, the processor 102 of the first device 100 may release, based on a number of consecutive discontinuous transmissions (DTX) for a carrier among the plurality of carriers reaching a threshold value, the carrier. In addition, the processor 102 of the first device 100 may detect, based on all of the plurality of carriers being released, a sidelink radio link failure.

Based on an embodiment of the present disclosure, a first device adapted to perform wireless communication may be provided. For example, the first device may comprise: at least one transceiver; at least one processor; and at least one memory connected to the at least one processor and storing instructions. For example, the instructions, based on being executed by the at least one processor, may cause the first device to perform operations comprising: establishing a PC5 radio resource control (RRC) connection with a second device; selecting a plurality of carriers; releasing, based on a number of consecutive discontinuous transmissions (DTX) for a carrier among the plurality of carriers reaching a threshold value, the carrier; and detecting, based on all of the plurality of carriers being released, a sidelink radio link failure.

Based on an embodiment of the present disclosure, a processing device adapted to control a first device may be provided. For example, the processing device may comprise: at least one processor; and at least one memory connected to the at least one processor and storing instructions. For example, the instructions, based on being executed by the at least one processor, may cause the first device to perform operations comprising: establishing a PCS radio resource control (RRC) connection with a second device; selecting a plurality of carriers; releasing, based on a number of consecutive discontinuous transmissions (DTX) for a carrier among the plurality of carriers reaching a threshold value, the carrier; and detecting, based on all of the plurality of carriers being released, a sidelink radio link failure.

Based on an embodiment of the present disclosure, a non-transitory computer-readable storage medium storing instructions may be provided. For example, the instructions, when executed, may cause a first device to perform operations comprising: establishing a PC5 radio resource control (RRC) connection with a second device; selecting a plurality of carriers; releasing, based on a number of consecutive discontinuous transmissions (DTX) for a carrier among the plurality of carriers reaching a threshold value, the carrier; and detecting, based on all of the plurality of carriers being released, a sidelink radio link failure.

FIG. 13 shows a method for a second device to perform wireless communication, based on an embodiment of the present disclosure. The embodiment of FIG. 13 may be combined with various embodiments of the present disclosure.

Referring to FIG. 13, in step S1310, the second device may establish a PC5 radio resource control (RRC) connection with a first device. For example, based on a number of consecutive discontinuous transmissions (DTX) for a carrier among a plurality of carriers reaching a threshold value, the carrier may be released by the first device. For example, based on all of the plurality of carriers being released, a sidelink radio link failure may be detected by the first device.

The proposed method can be applied to devices based on various embodiments of the present disclosure. First, the processor 202 of the second device 200 may establish a PC5 radio resource control (RRC) connection with a first device. For example, based on a number of consecutive discontinuous transmissions (DTX) for a carrier among a plurality of carriers reaching a threshold value, the carrier may be released by the first device. For example, based on all of the plurality of carriers being released, a sidelink radio link failure may be detected by the first device.

Based on an embodiment of the present disclosure, a second device adapted to perform wireless communication may be provided. For example, the second device may comprise: at least one transceiver; at least one processor; and at least one memory connected to the at least one processor and storing instructions. For example, the instructions, based on being executed by the at least one processor, may cause the second device to perform operations comprising: establishing a PC5 radio resource control (RRC) connection with a first device. For example, based on a number of consecutive discontinuous transmissions (DTX) for a carrier among a plurality of carriers reaching a threshold value, the carrier may be released by the first device. For example, based on all of the plurality of carriers being released, a sidelink radio link failure may be detected by the first device.

Based on an embodiment of the present disclosure, a processing device adapted to control a second device may be provided. For example, the processing device may comprise: at least one processor; and at least one memory connected to the at least one processor and storing instructions. For example, the instructions, based on being executed by the at least one processor, may cause the second device to perform operations comprising: establishing a PC5 radio resource control (RRC) connection with a first device. For example, based on a number of consecutive discontinuous transmissions (DTX) for a carrier among a plurality of carriers reaching a threshold value, the carrier may be released by the first device. For example, based on all of the plurality of carriers being released, a sidelink radio link failure may be detected by the first device.

Based on an embodiment of the present disclosure, a non-transitory computer-readable storage medium storing instructions may be provided. For example, the instructions, when executed, may cause a second device to perform operations comprising: establishing a PC5 radio resource control (RRC) connection with a first device. For example, based on a number of consecutive discontinuous transmissions (DTX) for a carrier among a plurality of carriers reaching a threshold value, the carrier may be released by the first device. For example, based on all of the plurality of carriers being released, a sidelink radio link failure may be detected by the first device.

Based on various embodiments of the present disclosure, if carrier failure occurs for all carriers that include resource pools configured with PSFCH resources and satisfy a pre-configured CBR condition (e.g., a carrier with a CBR value lower than a pre-configured CBR threshold level associated with a priority of a transmission packet), the UE may declare a radio link failure for a unicast session. Herein, for example, carrier failure for a particular carrier may mean that consecutive DTXs greater than or equal to a pre-configured threshold number occur on the corresponding carrier. Furthermore, by aligning PSFCH resources between carriers in the time domain, and/or by aligning the location of sidelink symbols between carriers, AGC problems may be prevented from occurring in communication based on carrier aggregation.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

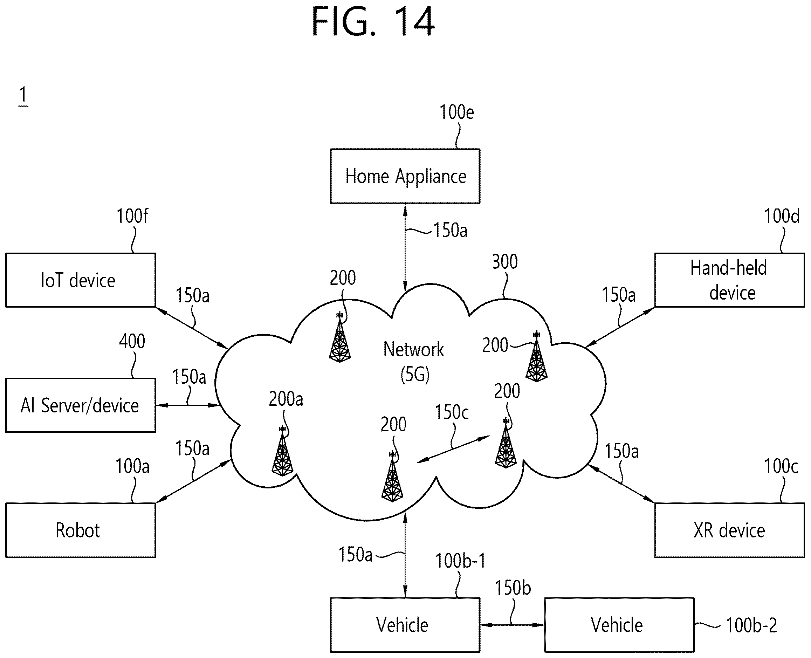

FIG. 14 shows a communication system 1, based on an embodiment of the present disclosure. The embodiment of FIG. 14 may be combined with various embodiments of the present disclosure.

Referring to FIG. 14, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

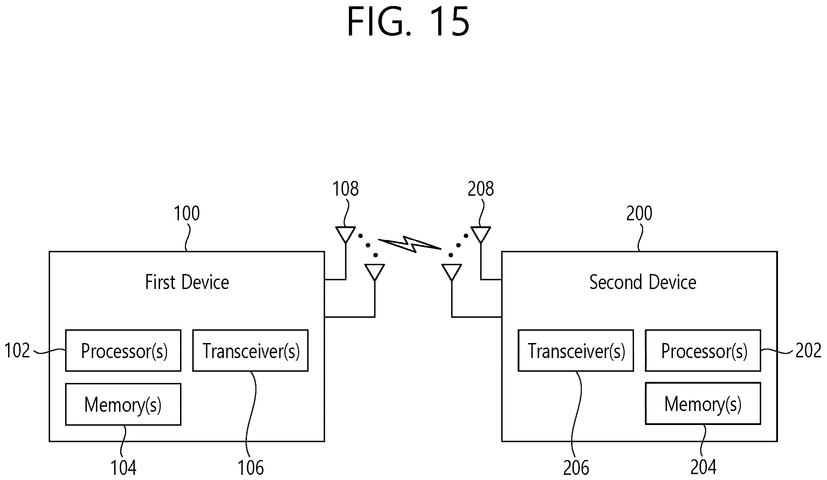

FIG. 15 shows wireless devices, based on an embodiment of the present disclosure. The embodiment of FIG. 15 may be combined with various embodiments of the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

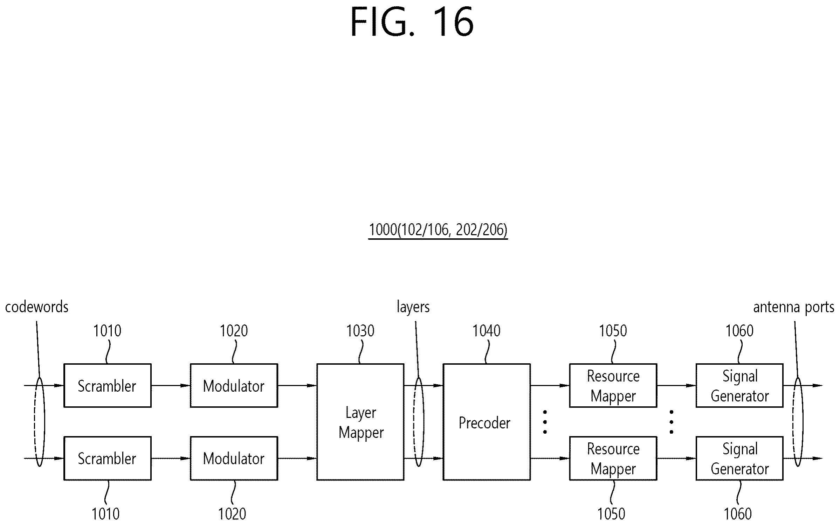

FIG. 16 shows a signal process circuit for a transmission signal, based on an embodiment of the present disclosure. The embodiment of FIG. 16 may be combined with various embodiments of the present disclosure.

Referring to FIG. 16, a signal processing circuit 1000 may include scramblers 1010, modulators 1020, a layer mapper 1030, a precoder 1040, resource mappers 1050, and signal generators 1060. An operation/function of FIG. 16 may be performed, without being limited to, the processors 102 and 202 and/or the transceivers 106 and 206 of FIG. 15. Hardware elements of FIG. 16 may be implemented by the processors 102 and 202 and/or the transceivers 106 and 206 of FIG. 15. For example, blocks 1010 to 1060 may be implemented by the processors 102 and 202 of FIG. 15. Alternatively, the blocks 1010 to 1050 may be implemented by the processors 102 and 202 of FIG. 15 and the block 1060 may be implemented by the transceivers 106 and 206 of FIG. 15.

Codewords may be converted into radio signals via the signal processing circuit 1000 of FIG. 16. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 16. For example, the wireless devices (e.g., 100 and 200 of FIG. 15) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

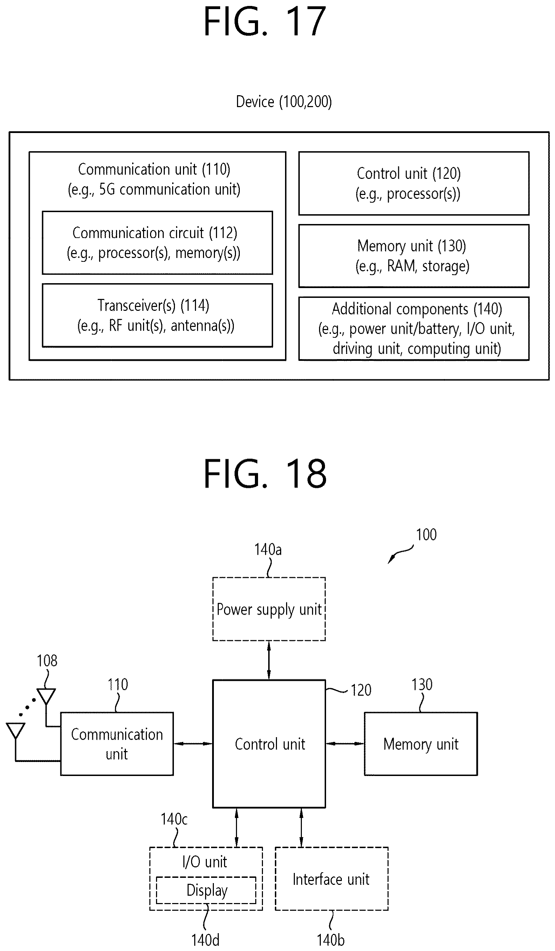

FIG. 17 shows another example of a wireless device, based on an embodiment of the present disclosure. The wireless device may be implemented in various forms according to a use-case/service (refer to FIG. 14). The embodiment of FIG. 17 may be combined with various embodiments of the present disclosure.

Referring to FIG. 17, wireless devices 100 and 200 may correspond to the wireless devices 100 and 200 of FIG. 15 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 15. For example, the transceiver(s) 114 may include the one or more transceivers 106 and 206 and/or the one or more antennas 108 and 208 of FIG. 15. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 14), the vehicles (100b-1 and 100b-2 of FIG. 14), the XR device (100c of FIG. 14), the hand-held device (100d of FIG. 14), the home appliance (100e of FIG. 14), the IoT device (100f of FIG. 14), a digital broadcast terminal, a hologram device, a public safety device, an MTC device, a medicine device, a fintech device (or a finance device), a security device, a climate/environment device, the AI server/device (400 of FIG. 14), the BSs (200 of FIG. 14), a network node, etc. The wireless device may be used in a mobile or fixed place according to a use-example/service.

In FIG. 17, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 17 will be described in detail with reference to the drawings.

FIG. 18 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 18 may be combined with various embodiments of the present disclosure.

Referring to FIG. 18, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 17, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

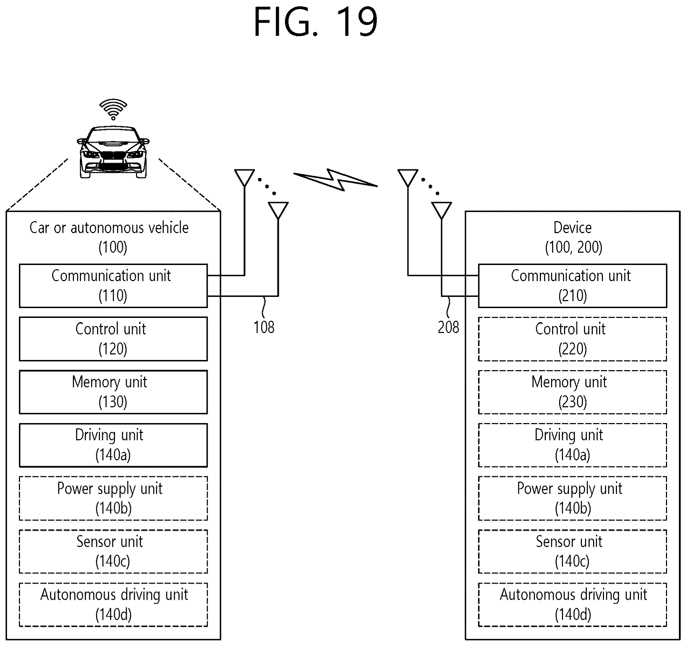

FIG. 19 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 19 may be combined with various embodiments of the present disclosure.

Referring to FIG. 19, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 17, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:
establishing a PC5 radio resource control (RRC) connection with a second device;
selecting a plurality of carriers;
releasing, based on a number of consecutive discontinuous transmissions (DTX) for a carrier among the plurality of carriers reaching a threshold value, the carrier; and
detecting, based on all of the plurality of carriers being released, a sidelink radio link failure.

2. The method of claim 1, wherein, based on detecting the sidelink radio link failure, the PC5 RRC connection is released.

3. The method of claim 1, wherein, based on some of the plurality of carriers being released, the PC5 RRC connection is kept.

4. The method of claim 1, wherein, based on data to be transmitted by the first device being set to hybrid automatic repeat request (HARQ) feedback enabled, the plurality of carriers are selected among carriers (i) for which a physical sidelink feedback channel (PSFCH) resource is configured and (ii) with a channel busy ratio (CBR) measurement value less than a CBR threshold value.

5. The method of claim 4, wherein the CBR threshold value used to select the plurality of carriers is related to a priority of the data.

6. The method of claim 1, wherein the plurality of carriers are carriers related to the PC5 RRC connection.

7. The method of claim 1, wherein prioritization for PSFCH transmission is performed across the plurality of carriers.

8. The method of claim 1, wherein PSFCH resources on the plurality of carriers are aligned in a time domain.

9. The method of claim 1, wherein a frequency domain of PSFCH resources or a minimum time gap between PSFCH and physical sidelink shared channel (PSSCH) is configured independently for the plurality of carriers.

10. The method of claim 1, wherein a location of a sidelink start symbol, a number of sidelink symbols, a cyclic prefix, and a subcarrier spacing are configured equally for the plurality of carriers.

11. The method of claim 1, further comprising:
reporting information related to the carrier to the base station, based on the number of consecutive DTXs for the carrier among the plurality of carriers reaching the threshold value.

12. The method of claim 1, further comprising:
transmitting, to the second device, information on whether packet duplication is supported.

13. The method of claim 1, further comprising:
transmitting, to the second device, a first PC5 RRC message for carrier addition or modification; and
receiving, from the second device, a second PC5 RRC message for completion of the carrier addition or modification.

14. A first device adapted to perform wireless communication, the first device comprising:
at least one transceiver;
at least one processor; and
at least one memory connected to the at least one processor and storing instructions that, based on being executed by the at least one processor, cause the first device to perform operations comprising:
establishing a PC5 radio resource control (RRC) connection with a second device;
selecting a plurality of carriers;
releasing, based on a number of consecutive discontinuous transmissions (DTX) for a carrier among the plurality of carriers reaching a threshold value, the carrier; and
detecting, based on all of the plurality of carriers being released, a sidelink radio link failure.

15. A processing device adapted to control a first device, the processing device comprising:
at least one processor; and
at least one memory connected to the at least one processor and storing instructions that, based on being executed by the at least one processor, cause the first device to perform operations comprising:
establishing a PC5 radio resource control (RRC) connection with a second device;
selecting a plurality of carriers;
releasing, based on a number of consecutive discontinuous transmissions (DTX) for a carrier among the plurality of carriers reaching a threshold value, the carrier; and
detecting, based on all of the plurality of carriers being released, a sidelink radio link failure.

16. A non-transitory computer-readable storage medium storing instructions that, when executed, cause a first device to perform operations comprising:
establishing a PC5 radio resource control (RRC) connection with a second device;
selecting a plurality of carriers;
releasing, based on a number of consecutive discontinuous transmissions (DTX) for a carrier among the plurality of carriers reaching a threshold value, the carrier; and
detecting, based on all of the plurality of carriers being released, a sidelink radio link failure.

17. A method for performing wireless communication by a second device, the method comprising:
establishing a PC5 radio resource control (RRC) connection with a first device,
wherein, based on a number of consecutive discontinuous transmissions (DTX) for a carrier among a plurality of carriers reaching a threshold value, the carrier is released by the first device, and
wherein, based on all of the plurality of carriers being released, a sidelink radio link failure is detected by the first device.

18. A second device adapted to perform wireless communication, the second device comprising:
at least one transceiver;
at least one processor; and
at least one memory connected to the at least one processor and storing instructions that, based on being executed by the at least one processor, cause the second device to perform operations comprising:
establishing a PC5 radio resource control (RRC) connection with a first device,
wherein, based on a number of consecutive discontinuous transmissions (DTX) for a carrier among a plurality of carriers reaching a threshold value, the carrier is released by the first device, and
wherein, based on all of the plurality of carriers being released, a sidelink radio link failure is detected by the first device.

19. A processing device adapted to control a second device, the processing device comprising:
at least one processor; and
at least one memory connected to the at least one processor and storing instructions that, based on being executed by the at least one processor, cause the second device to perform operations comprising:
establishing a PC5 radio resource control (RRC) connection with a first device,
wherein, based on a number of consecutive discontinuous transmissions (DTX) for a carrier among a plurality of carriers reaching a threshold value, the carrier is released by the first device, and
wherein, based on all of the plurality of carriers being released, a sidelink radio link failure is detected by the first device.

20. A non-transitory computer-readable storage medium storing instructions that, when executed, cause a second device to perform operations comprising:
establishing a PC5 radio resource control (RRC) connection with a first device,
wherein, based on a number of consecutive discontinuous transmissions (DTX) for a carrier among a plurality of carriers reaching a threshold value, the carrier is released by the first device, and
wherein, based on all of the plurality of carriers being released, a sidelink radio link failure is detected by the first device.
